# EUROPEAN PATENT SPECIFICATION

(11) **EP 3 789 729 B1**
(45) Date of publication and mention of the grant of the patent: **25.10.2023**
(21) Application number: 20186840.3
(22) Date of filing: 21.07.2020
(51) Int. Cl.: G01B 11/24

(54) **METHOD OF NON-CONTACT SCANNING OF PROFILES OF ROTATING OBJECTS AND EVALUATION OF THEIR EXTERNAL DIMENSIONS**
VERFAHREN FÜR BERÜHRUNGSLOSES SCANNEN VON PROFILEN VON ROTIERENDEN OBJEKTEN UND AUSWERTUNG IHRER ÄUSSEREN DIMENSIONEN
PROCÉDÉ DE SCANNAGE SANS CONTACT DE PROFILS D'OBJETS ROTATIFS ET ÉVALUATION DE LEURS DIMENSIONS EXTERNES

(30) Priority: 30.08.2019 CZ 20190560
(43) Date of publication of application: 10.03.2021
(73) Proprietor: Vysoká Skola Bánská - Technická Univerzita Ostrava, 70800 Ostrava-Poruba (CZ)
(72) Inventor: Fojtik, David, 74714 Markvartovice (CZ); Mihola, Milan, 70800 Ostrava, Poruba (CZ); Czebe, Jiri, 58601 Jihlava (CZ); Podesva, Petr, 70030 Ostrava, Vyskovice (CZ); Gebauer, Jan, 74706 Opava, Kylesovice (CZ)
(74) Representative: Dadej, Leopold

(56) References cited:
- DE-A1- 3 724 656
- DE-A1- 19 927 872
- DE-A1-102017 131 465
- US-A1- 2009 103 113
- US-A1- 2011 164 244
- DATABASE COMPENDEX [Online] ENGINEERING INFORMATION, INC., NEW YORK, NY, US; 1 January 2013 (2013-01-01), SHIZUKA H ET AL: "Development of an on-machine tool monitoring system by using a high-speed 2d measurement sensor", XP002801898, Database accession no. E20144400137161 & PROCEEDINGS OF THE 13TH INTERNATIONAL CONFERENCE OF THE EUROPEAN SOCIETY FOR PRECISION ENGINEERING AND NANOTECHNOLOGY, EUSPEN 2013 2013 EUSPEN GBR, vol. 2, 2013, pages 121-124,
- HU-TIAN FENG ET AL: "An automatic measuring method and system using a light curtain for the thread profile of a ballscrew;An automatic measuring method and system using a light curtain for the thread profile of a ballscrew", MEASUREMENT SCIENCE AND TECHNOLOGY, IOP, BRISTOL, GB, vol. 22, no. 8, 1 July 2011 (2011-07-01), page 85106, XP020208752, ISSN: 0957-0233, DOI: 10.1088/0957-0233/22/8/085106
- Zelinka ET AL: "Bezkontaktni mereni rozmeru - opticke mikrometry", Automa, 1 April 2009 (2009-04-01), pages 50-52, XP055722810, Retrieved from the Internet: URL:https://automa.cz/Aton/FileRepository/ pdf_articles/38860.pdf [retrieved on 2020-08-17]

## Description

### Technical Field

The present invention relates to a method of non-contact measurement and inspection of dimensions and profiles of rotating objects, for example those produced on programmed machine tools, particularly on CNC lathes. Furthermore, the present invention relates to a measuring device for performing said method.

### Background of the Invention

Modern serial production of rotating objects (shafts, cylinders, rotors, half-shafts, pins, bushings, bearings, etc.) is realized exclusively on programmed machine tools, particularly on CNC lathes. Despite the outstanding features of these cutting-edge machine tools, the production is not possible without a subsequent inspection of the products. There are many reasons, e.g. wear of the instruments, inconsistency of the machined materials, effect of temperature, standard machine wear, material fatigue, and others.

The inspection of products in particular is one of the fundamental obstacles to automation of engineering production. The replacement of human eyes and hands with fine motor control with the ability of unlimited adaptability is still one of the insurmountable challenges. On the other hand, the monotony in mass production causes a state of reduced activation in humans, which is manifested by sleepiness, weariness, decrease and fluctuation of performance, decreased adaptability and reactivity, resulting in errors. Any automation that reduces the error rate while enhancing accuracy, speed, and reliability of the process is desired.

In case of standard lathe production, the inspection of the dimensions is performed continuously by the lathe operator (turner), most commonly using mechanical or manual contact meters. During the production on CNC lathes, the inspection of the dimensions is usually performed only after the turning is finished. In case of mass production, the inspection of the dimensions is often performed on chosen samples using special automated, contact, or non-contact measuring instruments.

Manual contact meters for measuring the diameter include e.g. a sliding caliper and outside micrometer. Manual contact measurements also include indirect meters used to verify whether the diameter is in the desired manufacturing tolerance or whether the profile corresponds to the template. For measuring external diameters, outside limit gauges are used. Specially designed shape gauges are used to verify the shapes, which are attached to the profile, and the operator visually inspects the deviations, most often by the degree of light transmission. Manual measurement is the domain of piece or small series production. The advantages are low price and high flexibility. The disadvantages are the large influence of the human factor and the low measurement speed. The accuracy of the measurement depends on the operator's experience and approach.

For series production or when high measuring accuracy is required, measuring machines that use an automated or fully automatic measuring method are used. For large production runs, these machines are single-purpose, optimized for a specific product type, and usually measure completely automatically. An advantage is a fast measurement of all the inspected dimensions. A disadvantage is low flexibility. In contrast, universal measuring machines offer high flexibility, but they are slower and require professional service. These include, for example, 3D coordinate measuring machines. An advantage of measuring machines is the high accuracy and reliability of the measurements. The main disadvantages are the high price and the need to manipulate the product to grip it in the machine.

When machine-measuring the diameters of rotating components such as shafts, pins, cylinders, etc., optical micrometers based on the "thru-beam" principle are preferably used. These evaluate the diameter of the measured component based on the degree of shading of the flat collimated beam of rays incident directly or indirectly on the line CCD or CMOS sensor. Between the source of the collimated beam of rays and the line sensor, the measured rotating component is inserted with the rotation axis perpendicular to the light beam.

A "thru-beam" principle in its simplest arrangement is applied in the form of a cheap and commonly used one-way optical barrier having only one photosensitive cell returning information whether this cell is illuminated or not. At one end, it is provided with a point light source (bulb, diode, laser, etc.) and at the other end, with a single-point receiver, most often a photodiode or photoresistor. This "thru-beam" device is not suitable for measuring dimensions since it does not provide any other data, e.g., dimensional data. The photoresistor can only return the intensity of the incident light on the receiver. This is used to detect the presence of an object between the light source and the receiver. Usually, the decrease in incident light intensity is evaluated since a certain amount of light from other sources is always present (e.g from daylight) even if the receiver is in a shadow. One-way optical barrier is used, for example, to detect an obstacle between doors (elevator doors, etc.) which then prevents the door from closing when there is a person between the doors, etc. One-way optical barrier in a in combination with an adjustable optical system as disclosed in DE3724656A1 is used for measuring diameters of objects, but one-way optical barrier itself is not able return information about the position of the edge of shading of said object. The light intensity is measured while the optical system is continuously mechanically positioned to determine the moment when the edge of the measured object is above the photodetector. Plenty of measurements must be performed to determine one edge value. It is very time consuming to scan whole object to determine diameters.

On the other hand, optical micrometers introduce more sophisticated "thru-beam" system having a line of CCD/CMOS cells (in the thousands) reacting to collimated rays. The cells are close together and have a size of µm. If an object is inserted between the source so that some cells are shaded and others are not, then it is possible very precisely and by a single measurement to identify the place where the intensity of light on the receiver changes, thus detecting the edge of the transition of light and shadow on CCD/SMOS sensor. Optical micrometer does not return the illumination intensities of individual cells, but directly the dimensions. To minimize an influence of the surrounding light source, as a standard part of optical micrometers upstream of a receiver there is always an optical filter for the light wavelength of the main light source.

In case of measured diameters that are smaller than the measuring range of the optical micrometer, the measured object is inserted wholly into the beam of rays such that the beam of rays illuminates the CCD or CMOS sensor from both sides of the measured diameter. CCD-type semiconductor sensors work based on the principle of charge-coupled elements, while CMOS-type sensors work based on the principle of unipolar transistors. The size of the cast bounded shadow then corresponds to the measured diameter. Optical micrometers of the "thru-beam" type made by Keyence (https://www.keyence.com/ss/products/measure/measurement_library/type/optical/) or Micro-epsilon (https://www.micro-epsilon.com/2D_3D/optical-micrometer/micrometer/) can be currently found on the market.

To measure larger diameters, a pair of opposed optical micrometers is used, whose line sensors and flat collimated beams of rays are located in one plane and are parallel to and spaced from each other by a precisely known distance. The measured object is inserted in the middle between the sensors through the rotation axis perpendicular to the plane of the beam of rays such that it partially casts a shadow at both sensors. The resulting diameter is determined by the sum of the known distance between the sensors and the sizes of the cast shadows of both micrometers. This measurement principle is used in Keyence's (https://www.keyence.eu/landing/inner_outer_diameter.jsp) optical micrometer.

To measure the ovality, at least two and preferably several pairs of sensors are used, whose collimated beams of rays are turned around the rotation axis of the measured object by a known angle so that they symmetrically measure the diameter of the object in several axes.

To measure the object in several places, the displacement of the optical sensors or the measured object around the rotation axis of the object by a known distance is used. A set of diameters measured in various places around the measured object is obtained.

If the displacement step is sufficiently accurate and fine, the profile of the measured object may be partially scanned. In this manner, the cylindrical and partially conical areas of the measured component may be scanned. The accuracy of the scanning depends on the accuracy of the displacement measurement and, in case of the conical areas, on the angle between the conical area and the collimated beam of rays (from around 90 to 45°). For example, it is a device made by Riftek (https://riftek.com/eng/products/∼show/instruments/special_devices/Automated-system-for-motor-shafts-measurement) or Vicivision (https://www.vicivision.com/optical-measuring-machines-for-turned-parts/).

The patent application US2011/164244 A1 discloses obtaining a 2D image of a projected shadow of a part of a profile of the measured thread by taking several images in the determined positions of the moving camera. The 2D image is processed by known image processing methods and required dimensions are determined from the 2D profile image. The parts of the thread profile, that are in the shade during the optical measurement and cannot be captured in the 2D image, are measured point by point by the contact measuring and subsequently combined with the image of the processed thread profile. The method and camera with image processing represent too demanding, complicated, and expensive system processing big data files and evaluating dimensions on a different principle than with optical micrometers. There is no need to use specific light source with camera. No optical filters are standard part of the camera.

The patent application DE19927872 A1 is related to inspection of the cutter teeth by a combination of optical non-contact measurement and contact measurement, whereas the optical non-contact measurement is again based on processing of a 2D image obtained by a camera heading to a light source and between them there is a measured cutter tooth, which casts a partial shadow on the image receiver of the camera. The measurement is relative to the edges of the tooth. The undefined tilting the axis of the optical head of D1 document relative to the tangent to the surface of the object of the optical system is in this case necessary to project required part differently shaped teeth of the cutters on the camera, but the angle of tilting is not measured and used for location of edge, calculation of dimensions of any damage determination.

An article from Database Compendex, Engineering Information, inc., New York, by Shituka H. et al: "Development of an On-machine Tool Monitoring System by Using a High Speed 2D Measurement Sensor", Database accession no. E20144400137161; &PROCEEDINGS OF THE 13TH INTERNATIONAL CONFERENCE OF THE EUROPEAN SOCIETY FOR PRECISION ENGINEERING AND NANOTECHNOLOGY, EUSPEN 2013 2013 EUSPEN GBR, vol. 2, 2013, pages 121-124, discloses measuring outer diameter, radius and roundness of the tool wear using a 2D High-speed Optical Micrometer of Keyence TM-3000 optical system. Despite the commercial name the measurement is again based on the principle of camera and evaluating the dimensions only after processing the 2D image of the cast shadow of profile of the measured tool taken by the camera evaluated by the evaluation unit. This is also evidenced by the sampling frequency of the device, which is 30 Hz (see chapter 3.2 of the article). Moreover, there is a disadvantage because the diameter of the measured tool and the evaluated part must be smaller than the measuring range of the optical system.

Document DE102017 131465 A1 discloses calibration of the optical micrometer itself and compensating for the thermal expansion of the caliber but it does not disclose calibration of the assembly in which optical head is positioned in relation to reference point

An article: "An automatic measuring method and system using a light curtain for the thread profile of a ballscrew" by Hu-Tian Feng et al., Measurement Science and Technology, IOP, Bristol, GB, vol.22, no.8, 1 July 2011 (2011-07-01), page 85106., XP020208752, ISSN: 0957-0233, DOl: 10.1088/0957-0233/22/8/085106; teaches the method using a light curtain, a high-accuracy linear encoder and a motion platform for the measuring stand. Patent application US2009/103113 A1 discloses a method and a system for optically inspecting parts with use of scanning the part with an array of spaced planes of radiation so that the part occludes each of the planes of radiation at spaced locations along the axis to create a corresponding array of unobstructed planar portions of the planes of radiation.

The article "Zelinka, O.: Bezkontaktní měření rozměrů - optické mikrometry; In: Automa 4/2009" describes aspects of the methods of non-contact measurement of dimensions and optical micrometers of the "thru-beam" type used as a measuring device for automated measurement of static and moving objects. In four chapters (1-4), the operating principle, structure, measurement modes, and limitations of the optical micrometer of the "thru-beam" type are generally described.

From the operating principle (chapter 1), it is known that the measured object is illuminated from the transmitter by a collimated beam of rays, which is partially shaded by the measured object, wherein the remainder of the unshaded beam falls on the receiver, preferably on the pixels of the line CCD-CMOS sensor. From the information about the order and brightness of the individual pixels, it is possible to determine the position of the edges of light and shadow, and thus the dimensions of the objects in front of the sensor. An important aspect of this principle is a gradual change in the brightness of the edge of the shadow of the object on the sensor caused by the bending of light, wherein this aspect affects the accuracy of the measurement itself. The processing and evaluation of the individual brightness values from the sensors is then performed analogously (using a comparator with a set analog decision level) or digitally (using an AD converter and computer technology).

From the point of view of the structure (chapter 2) of optical micrometers with line sensors, several alternative embodiments of transmitters are described (a laser diode, LED diode, and transmitter using a laser ray swept by a rotating polygon with mirrors into the form of a parallel beam of rays gradually illuminating individual pixels of the line sensor) focusing on the advantages and disadvantages of the individual design variants. Options of using separate measuring heads connectable to a control unit are known. An exemplary measuring head comprises a transmitter with a light source and collimating optics and a receiver with a line sensor, signal preprocessing circuits, and possibly other optical components eliminating the defects of the collimated beam of rays. The control unit comprises hardware for calculating edge positions, control elements, and output peripherals with the possibility of connecting a larger number of measuring heads.

With regard to the measuring modes (chapter 3), it is known that an optical micrometer detects those edges in the brightness profile of the sensor that meet the set criteria, and, from the serial numbers of the individual pixels, evaluates their positions, or the distance between them. Optionally, calibration constants may be used for the calculated edge positions. Basic measuring modes include measuring the position of the end of the object located in the active area between the transmitter and the receiver (e.g. sheet plate position), measuring the distance between the edges of a continuous object (e.g. tube diameter), and measuring the distance between two objects (e.g. gaps between cylinders or measuring the terminals of integrated circuits). Furthermore, optical micrometers may be used for measuring moving objects, e.g. for measuring vibrations, ovality, or the diameter and sag of wound materials. For measuring diameters (of pipes, tubes, cables), the possibility of micrometers simultaneously measuring in several axes, e.g. two mutually perpendicular axes, is also permitted.

The general characteristics of an optical micrometer (chapter 4) that need to be addressed to achieve the accuracy of non-contact measurement of dimensions include resolving power, repeatability, linearity, working range, distance between the transmitter and the receiver, light source type and power, and output interface. Limitations may include the quality of light and the lighting conditions of the measurement and keeping the external areas of the transmitter and the receiver clean.

U.S. patent application no. 2014157610 A1 discloses systems, devices, and methods for integrating an electronic measuring sensor into a manufacturing device operating with a high accuracy, such as a CNC machine. For example, a laser sensor is used for measuring the distance. The measurements are performed at a relatively high sampling frequency and converted into a format compatible with other data generated or accepted by the CNC machine. The measurements from the sensor are synchronized with the position of the machine arm, for example, using offsets. Through the processing, a detailed and highly accurate three-dimensional map of the workpiece in the machine is obtained. The usable measuring instruments include other, almost continuously readable non-destructive characterization instruments, such as contact and non-contact dimensional, eddy currents, ultrasonic and X-ray fluorescence (XRF) sensors. The various applications of the measurements include: multiple component adaptations, machine drift correction, closed-loop machine control, and verification of product tolerances through essentially complete serial inspection of dimensional quality.

U.S. patent application US 2019063902 A1 discloses a device for monitoring the thickness of a wheel valve aperture on a line, which is mainly composed of a frame, base plate, lifting cylinder, first bracket, bearing base, linear bearing, mounting plate, guide shaft, lifting shaft, first servomotor, first synchronous pulley, connecting plate, synchronous belt, and the second synchronous pulley. The base plate, third bracket, and second mounting stand are mounted on the frame, a visual sensor is mounted on the third bracket, the mounting plate is mounted on the base plate using the first bracket, the bearing base is mounted on the mounting plate and the lifting shaft is mounted on the bearing base using a linear bearing.

U.S. patent application no. US 2007009345 A1 discloses a substrate loading device having a frame, a cassette carrier and a user interface. The frame is connected to a substrate processing device. The frame has a transport opening through which the substrates are transported between said device and the substrate processing device. The cassette carrier is connected to a frame for holding at least one substrate cassette. The user interface is arranged for entering information and is connected to the frame so that the user interface is an integral part of the frame.

A disadvantage of the above systems is that they are offered as stand-alone measuring machines, they are not an additional or integral part of program-controlled machine tools, especially CNC lathes, and the principles used greatly complicate or completely rule out this possibility (e.g. a fixed optical system would be damaged during machining).

Another disadvantage of the above-mentioned systems also lies in the fact that between machining and scanning of the product profile, it is necessary to manipulate the product and adjust its position to the measuring machine. If further machining is required after the measurement, manipulation back to the machine tool, which is equally difficult, follows.

The low flexibility of these systems is also reflected in the exchange of production runs and changes in the methods of product machining.

In addition, said systems are not adapted to scan every production piece without a significant increase in the production costs, as is the case with universal measuring systems.

### Summary of the Invention

The object of this invention is to provide a method of automatic scanning and evaluation of profiles of rotating objects, including measuring the diameters and deviations of objects from the specified drawing, directly on a program-controlled machine tool, particularly on a CNC lathe, and without the need to manipulate the product itself between the machining and scanning steps, or possibly on a separate measuring device. This object is achieved with a method according to claim 1 of the appended claims and a measuring device according to claim 14 of the appended claims.

The above-mentioned drawbacks are, to a certain extent, eliminated by a method of non-contact scanning of profiles of rotating objects and evaluation of their external dimensions, wherein the rotating object defined by its surface and rotation axis is mounted around a rotation axis, wherein in the simplest first aspect, said method comprises 7 steps.

In the first step, the device with the mounted rotating object is provided with a positionable optical head having at least one optical micrometer of the "thru-beam" type that comprises a transmitter (light source, radiator) and a receiver of at least one collimated beam of rays. The optical head is positionable in the scanning plane in the transverse and/or longitudinal direction, wherein the scanning plane comprises a rotation axis. If the device is a program-controlled machine tool, the optical head is connected and mounted manually or using an automatic instrument exchange process.

In the second step, calibration of the position of the optical head is performed before the scanning of the rotating object, and the initial scanning point is determined. During the calibration, at least one optical micrometer is displaced during the scanning along the profile of the gauge of known dimensions and shape and with the rotation axis parallel or identical to the rotation axis of the rotating object so that the receiver is partially shaded by the profile of the gauge during the scanning, similarly as in the case of scanning of the rotating object. At least one edge of the shadow transition and the incident collimated beam of rays is thereby scanned on the receiver. From the scanned profile of the gauge, the initial scanning point on the rotation axis and the position of the optical micrometer relative to it are evaluated. The dimensions of the gauge are precisely known, and from the obtained deviation of the scanned profile relative to the actual dimensions of the gauge, angles, scales, and relative displacements of the optical micrometers of the system are evaluated. The measuring plane may be set to the initial scanning position on the surface of the gauge. An initial scanning point is selected located on the rotation axis, and its position relative to the optical head is determined. This point defines a reference point when evaluating the shape of the profile of the rotating object.

In the third step, at least one measuring plane of at least one optical micrometer is determined, and this plane is defined by the collimated beam of rays and at least one row of photosensitive cells of a CCD/CMOS sensor in the receiver at an angle of 90° ± 45° relative to the surface of the rotating object. Furthermore, the angle of the measuring plane relative to the rotation axis is evaluated.

In the fourth step, at least one point on the surface of the rotating object in the measuring plane is scanned by at least one collimated beam of rays of the optical micrometer so that the receiver is partially shaded by the rotating object during the scanning. Said point or points are thus projected into at least one edge of the shadow transition and the incident collimated beam of rays on the receiver. Each point in the measuring plane is represented on the receiver by an edge in the scanning plane perpendicular to the measuring plane. The scanning plane is therefore defined by a receiver plane, whereas the measuring plane is defined by the collimated beam of rays and a row of photosensitive cells of the CCD/CMOS sensor in the receiver.

In the fifth step, on the one hand, the distance *R* of the point or points on the surface of the rotating object from the rotation axis and, on the other hand, the position of the point or points on the surface of the rotating object relative to the initial scanning point on the rotation axis are evaluated using an evaluation unit. The distance *R* as well as the position of the point or points on the surface of the rotating object relative to the initial scanning point are evaluated based on the distance of an edge on the receiver and the relative position of the initial point of the receiver relative to the initial scanning point on the rotation axis, and furthermore, based on the data about the position of the optical head relative to the rotation axis, these data comprising data from the sensor of longitudinal displacement and the sensor transverse displacement of the carrier frame and data about the angle of rotation of the measuring plane in accordance with the third step, wherein each row is evaluated separately as one line CCD/CMOS sensor. Therefore, the optical micrometer is used as a rangefinder and the distance *R* perpendicular to the rotation axis represents the radius of the measured rotating object. The evaluation unit may comprise various modules and circuits for real-time monitoring.

In the sixth step, the optical head is moved in the longitudinal and/or transverse direction relative to the surface of the rotating object, its position relative to the initial scanning point is determined, and the third, fourth, and fifth steps are repeated. The optical head is positioned in the longitudinal and/or transverse direction using the longitudinal displacement and transverse displacement of the carrier frame to which the optical head is mounted. The accuracy of the measurement depends not only on the accuracy of the optical micrometers themselves but also on the accuracy of the knowledge of the position and orientation of the individual optical micrometers, which may be slightly different after each gripping of the system.

In the seventh step, a set of points on the surface of the rotating object in the scanning plane is obtained, and subsequently, the shape of the profile of the rotating object is evaluated.

Another advantageous aspect of this invention is that the edge of the shadow transition and the incident collimated beam of rays is scanned using photosensitive cells on the area of the receiver composed of a line CCD/CMOS sensor or matrix CCD/CMOS sensor. The term CCD/CMOS sensor means a sensor based on the principle of a charge-coupled device (CCD), a complementary sensor based on the principle of layers of metal, oxide, and semiconductor (CMOS), or a combination thereof. Simultaneously, the distance *R* of the point on the surface of the rotating object from the rotation axis may be evaluated based on the edge on the receiver that is the closest to the rotation axis. In case a line CCD/CMOS sensor is used, it is a one-dimensional optical micrometer with one measuring plane, whereas in case of a matrix CCD/CMOS sensor, it is a multidimensional optical micrometer with several measuring planes. Therefore, the matrix CCD/CMOS sensor with several measuring planes works as an assembly of several line CCD/CMOS sensors, but with lower demands on material and components.

According to the third advantageous aspect of this invention, the angle of the measuring plane of the optical micrometer relative to the surface of the rotating object is changed during the scanning, step by step or continuously, or the angle may remain unchanged. An important aspect of this invention is that the measuring plane is turned such that it forms an angle as close to the perpendicular to the surface of the rotating object as possible. The axis of turning of the optical micrometer is parallel to the collimated beam of rays and is preferably located in the middle of the measuring range *L*/2 of the optical micrometer.

Continuous turning of the optical micrometer may take place between two defined angles, or with permanently constant revolutions. Repeated measurements are performed during each revolution, thereby obtaining a set of points affected by the current position of the optical head and the angle of turning of the optical micrometer. The points obtained during the turning of the one-dimensional optical micrometer may be filtered based on the distance of the edge of the shadow transition and the incident collimated beam of rays on the CCD/CMOS sensor from the axis of turning.

In case of measuring the lengths of stepped cylindrical areas or the widths of grooves, the optical micrometer may be turned parallelly, i.e. at an angle of 0° to the rotation axis of the rotating object. When measuring the width of the grooves, it is necessary to change the method of placement of the optical micrometer and evaluation of the edges of the cast shadow detected on the line CCD/CMOS sensor such that the collimated beam of rays is shaded from both sides and the center of the groove is in the middle of the measuring range *L.* Simultaneously, the length of the illuminated portion in the middle of the measuring range *L* is evaluated, which represents the width of the groove.

The fourth advantageous aspect of this invention is that in case of a varying angle of the measuring plane, the receiver may be turned around the axis of turning of the optical micrometer parallel to the measuring plane using a precise feedback drive. On top of that, the transmitter of the collimated beam of rays may be turned around the axis of turning of the optical micrometer parallel to the measuring plane using said precise drive or using another independent drive. Both drives may be mechanically connected (i.e. dependent on each other), or they may be independent of each other. In case of mechanically independent drives, their synchronization is preferably desired. Due to the drives, the evaluation unit is expanded with a control module that, based on the position of the carrier frame, or based on the knowledge of the profile of the rotating object, turns the optical micrometer so that the measuring plane represented by the collimated beam of rays and line CCD/CMOS sensor forms an angle close to the perpendicular to the scanned surface of the rotating object. The angle of turning of the optical micrometer must be feedback-measured, or reliable fixed positions of the receiver of several variants of the angle of turning must be provided.

The fifth advantageous aspect of this invention is that the collimated beam of rays is an areal collimated beam of rays incident on the matrix CCD/CMOS sensor.

With regard to the fifth aspect of the invention, the turning of the one-dimensional optical micrometer may preferably be realized only at the level of turning of the line CCD/CMOS sensor, provided that the transmitter is capable of simultaneously illuminating the area covering all positions of turning of the receiver by means of the areal beam of rays.

According to the sixth advantageous aspect of this invention, during the scanning, the optical head is moved in the first longitudinal direction relative to the rotation axis (e.g. to the right), wherein to move the optical head in the second, opposite longitudinal direction (e.g. to the left), the scanning is interrupted. Then the optical head is moved in the second longitudinal direction beyond the initial scanning position (e.g. by a multiple of the expected deviation), and the optical head is subsequently moved to the initial scanning position in the first longitudinal direction. In this manner, the insensitivity and inaccuracy of the position of the carrier frame caused by the deviations of the longitudinal and transverse displacement are eliminated.

The seventh aspect of this invention is that the rotating object may be turned on the device on which it is mounted, e.g. on a program-controlled machine tool, around its rotation axis during the scanning. In the rotating object turning mechanism, precise control of the angle of turning of the rotating object with high accuracy of the feedback measurement is preferably implemented.

It is preferred to control the method and speed of turning of the rotating object and displacement of the optical head so that the measured rotating object at the required distance from the initial position of the measured rotating object is measured at all required angles of turning, or that the rotating object is measured around the circumference in the required places. From the set of measured points of one revolution, it is possible to detect a number of defects of the measured object, such as run out, uneven wear, ovality, damage, etc. In case of a worn cylinder, it is possible to detect the maximum wear and evaluate the required depth of material removal for the renovation of the profile of the cylinder by new machining while allowing the diameters of the cylinders to be reduced.

Furthermore, according to the eighth aspect of this invention, the measuring plane of the optical micrometer is preferably set in the third step using a visible laser ray from an optical aiming device mounted on the optical head. The laser ray is oriented parallelly to the collimated beam of rays and visually helps the operator to manually set the initial position of the optical head for the process of scanning or calibration.

According to the ninth advantageous aspect of this invention, regarding the displacement of the optical head in the longitudinal direction relative to the rotation axis during the calibration of the position of the optical head, the calibration of the displacement of the optical head in this direction is also preferably performed. During the scanning, the optical head is displaced only in one direction during the calibration, usually with the measuring plane perpendicular to the rotation axis. Simultaneously, scanning of a suitable portion of the rotating object or gauge takes place, and the data from the displacement are compared with the data measured on the calibrated optical micrometer of the system. Analogously, the calibration of the movement of the optical head in the transverse direction relative to the rotation axis is performed.

Furthermore, with respect to the variable angle of the measuring plane relative to the surface of the rotating object, calibration of the precise drive of turning of the optical micrometer is preferably performed. This involves repeated scanning of a suitably designed gauge of known dimensions with different angles of turning of the optical micrometer.

According to the tenth advantageous aspect of this invention, the rotating object is scanned using a pair of optical micrometers in two measuring planes with a pair of collimated beams of rays. The measuring planes of the pair of collimated beams of rays may form a V shape without crossing. Furthermore, the edges of the shadow transition and the incident collimated beams of rays are scanned using a pair of receivers composed of line CCD/CMOS sensors. Both measuring planes are set at angles of ±45° relative to the rotation axis, and these measuring planes form an angle of 90°. In the first measuring plane, the surface of the rotating object may be scanned in the first longitudinal direction, and in the second measuring plane, the surface of the rotating object may be scanned in the second, opposite longitudinal direction. By this 45° setting of the measuring planes, the conical areas of the rotating objects may be preferably scanned.

According to the eleventh advantageous aspect of this invention, the rotating object is scanned by at least two optical micrometers in at least two crossed measuring planes, wherein each measuring plane is defined by the collimated beam of rays and a row of photosensitive cells on the area of the receiver composed of one matrix CCD/CMOS sensor. Two or four measuring planes may be preferably present. Furthermore, the edges of the shadow transition and the incident collimated beams of rays are scanned using individual rows of photosensitive cells of the measuring planes. These rows are treated as multiple independent line CCD/CMOS sensors.

In this aspect of the invention, two measuring planes may be set at an angle of 45° relative to the rotation axis. These measuring planes may then form an angle of 90°. In case of a pair of crossed measuring planes, the surface of rotating object may be scanned in both planes simultaneously. With this 45° setting of the measuring planes, the conical areas of the rotating objects may be preferably scanned.

However, there may be a problem when scanning narrow grooves (recesses) in this setting, where thanks to the larger measuring range of the sensor, the collimated beam of rays of the optical micrometer is completely or partially shaded also from the other side by the adjacent cylindrical portion of the rotating object. The problem may be eliminated by an analysis of the edges of the cast shadow detected on the matrix CCD/CMOS sensor, where only one edge closest to the rotation axis of the rotating object is accepted.

Alternatively, the first measuring plane is set in this aspect of the invention at an angle of 90° (perpendicular) relative to the rotation axis, whereas the second measuring plane is set at an angle of 0° (parallel) relative to the rotation axis of the rotating object. Using this parallel-perpendicular setting of the measuring planes, the narrow grooves (recesses) in the surface of the rotating object may be preferably scanned.

Alternatively, in this aspect of the invention, the rotating object is scanned by a four of optical micrometers in four crossed measuring planes defined by a foursome of collimated beams of rays together with their respective rows of photosensitive cells of the CCD/CMOS sensor. The first measuring plane is set at an angle of 90° (perpendicular) relative to the rotation axis, the second measuring plane is set at an angle of 0° (parallel) relative to the rotation axis, and the third and fourth measuring planes are set at angles of 45° (obliquely) relative to the rotation axis of the rotating object. Simultaneously, adjacent measuring planes may form an angle of 45°. Furthermore, the edges of the shadow transition and the incident collimated beams of rays are scanned using four rows of photosensitive cells on the area of the receiver composed of a matrix CCD/CMOS sensor.

Embodiments comprising a matrix CCD/CMOS sensors are the least demanding in terms of space, wherein they allow to measure all cylindrical and conical surface of the rotating object including the depths of the grooves as well as allow to measure the lengths of the surfaces (the widths of the grooves). The embodiments also allow to simultaneously scan in all optical planes at the same time, wherein the path of the optical head is positioned and optimized relative to the center of crossing of the optical planes.

The twelfth advantageous aspect is that for the evaluation of the edge of the shadow and the incident collimated beam of rays, all or selected rows of photosensitive cells on the area of the matrix CCD/CMOS sensor may be used, which are preferably arranged at an angle of 90° and/or ± 45° and/or 0° relative to the rotation axis. Therefore, in the eleventh aspect of this invention, these rows copy the arrangement of the measuring planes. In case of an areal collimated beam of rays, preferably all rows of photosensitive cells, i.e. the entire area of the matrix CCD/CMOS sensor, may be used.

According to the thirteenth advantageous aspect of this invention, the surface of the rotating object is gradually scanned firstly by the first, then the second, and then possibly by each subsequent one from the group of optical micrometers.

For example, in case of an optical head with a pair of separate optical micrometers, the object is preferably scanned in two phases separately, in directions of the longitudinal displacement of the system different for the first and the second optical micrometers along the rotation axis of the rotating object. Simultaneously, only one of the sensors is active in the given direction and scans areas that form an angle 90° up to ± 45° with the measuring plane. The areas parallel to the rotation axis are scanned by both sensors, and the points from these areas are used to improve the accuracy of and combine the images of the left and the right optical micrometers into the whole image of the profile of the rotating object.

Alternatively, the surface of the rotating object is scanned by all the optical micrometers simultaneously. To evaluate the shape of the profile of the rotating object, in both cases, the sets of points obtained from the individual optical micrometers are combined.

Furthermore, in case of special areas that do not have the shape of a rotating body, for example, vouches, in case of an exact resolution of the angle of turning around the rotation axis of the measured object, it is possible to obtain a set of sufficiently precisely measured points around the circumference of this area, representing the circumferential scan of the area, which may be compared with the required dimensions and the shape of the area in terms of dimensions and shape.

According to the fourteenth advantageous aspect of this invention, the optical head is mounted on the carrier frame of the program-controlled machine tool, preferably CNC lathe in particular, and the rotating object is mounted on the program-controlled machine tool using a chuck and/or tailstock. The gauge may preferably be integrated into the chuck for chucking the rotating object, in a chucking tip or tip sleeve of the tailstock of the program-controlled machine tool. To turn the measured rotating object, a spindle of the program-controlled machine tool may be preferably used.

Simultaneously, the optical head may be positioned in the transverse and/or longitudinal direction using a longitudinal displacement and transverse displacement of the carrier frame of the program-controlled machine tool. The optical head is mounted on the carrier frame, and its position may be evaluated using integrated position sensors of the program-controlled machine tool. The positioning of the carrier frame itself may be preferably performed by a control system of the program-controlled machine tool, and this system may assist the evaluation unit when evaluating the position of the optical head. More preferably, the optical head may be designed as a special, automatically exchangeable instrument of the program-controlled machine tool.

According to the fifteenth advantageous aspect of this invention, the optical head is mounted on the carrier frame, wherein it forms a separate measuring device.

Furthermore, the inspection of the dimensions from the obtained scans of the profiles of the rotating object or the circumferences of the specially shaped areas is preferably performed automatically using a computer evaluation based on comparison of the obtained scan of the profile of the object with pre-entered dimension parameters or with production CAD drawing of the profile.

The evaluation may be performed directly by the evaluation unit, or the unit may be connected to a computer to which it gives the data for evaluation. The computer may be provided with special software that visualizes the course of the process of scanning and allows to view the results of the measurement, including the measured deviations. In case several kinds of measured rotating objects exist, the special software may simultaneously be used to activate the respective specification for the particular inputted product. The computer may preferably visualize the data for the operator or give it to the superior system of the production line. The computer may preferably save the results and the scanned data into a database for archiving or subsequent analyses. The computer or the evaluation module may start other processes, e.g. alarms, based on the evaluated data and defined rules.

After the scanning of the surface of the rotating object is finished, the optical head may be disconnected from the carrier frame manually or using an automatic instrument exchange process.

The sixteenth advantageous aspect of this invention is a measuring device for non-contact scanning of profiles of rotating objects and evaluation of their external dimensions directly on a program-controlled machine tool or by using it as a separate measuring device whereby the measuring device is adapted to perform the method described above, wherein the rotating object defined by its surface and rotation axis is mounted in a rotary manner around the rotation axis. On the carrier frame of the measuring device, a positionable optical head is mounted, having at least one optical micrometer of the "thru-beam" type that comprises a transmitter and a receiver of at least one collimated beam of rays that, together with the row of photosensitive cells of the CCD/CMOS sensor in the receiver, forms a measuring plane. The purpose is the scanning of the surface of the rotating object in at least one measuring plane at an angle of 90° ± 45° relative to the surface of the rotating object. For scanning of at least one edge of the shadow transition and the incident collimated beam of rays, the receiver is provided on its area with a line CCD/CMOS sensor or a matrix CCD/CMOS sensor, wherein each edge is a projection of a point or points on the surface of the rotating object in the measuring plane. Said optical micrometer is adapted to have each row of said CCD/CMOS sensor evaluated separately as one line CCD/CMOS sensor, The measuring device further comprises an evaluation unit, sensors of longitudinal displacement, and sensors of transverse displacement of the carrier frame.

The main disadvantage of the method and device of this invention as compared to the state of the art is the ability to scan and measure the external areas and profiles of the rotating objects in an automatic and non-contact manner, including complex-shape cones or specially shaped areas, directly on the production device of the program-controlled machine tool, particularly a CNC lathe. Therefore, the optical head may preferably be embodied as a special instrument of the CNC lathe. Alternatively, the method and device may be used even as a separate measuring device, which increases its flexibility in various applications.

Another advantage is that the scanning may be performed continuously even between production phases without the need to manipulate the product.

Other advantages include the fact that the scanning may be performed completely automatically or semiautomatically, where the operator puts the optical measuring device into operation and starts individual consecutive automatic scanning processes.

One advantage is also that the scanning is performed in a non-contact manner, which is independent of the surface of the measured material of the rotating object.

Another advantage is that the scanning and measuring is performed swiftly and also with a high accuracy and resolution, thanks to which it is possible to evaluate the dimensions with an accuracy exceeding ± 0,01 mm.

Other advantages include preparation of the method of scanning for a new type of rotating object consisting of inputting a new drawing, including inputting the required tolerances, and programming the path of the displacement of the program-controlled machine tool that is in principle merely a program compilation needed for the production of the rotating object itself.

Another advantage is that from the scanned data, it is possible to create a computer model of the rotating object, which can then be visualized, analyzed, or processed in another manner. All results may be automatically saved in a database, which allows one to perform analyses or inspect the results or export them into other programs at any time without affecting the method of scanning.

### Description of the Drawings

A summary of the invention is further clarified using example embodiments thereof, which are described with reference to the accompanying drawings, in which:
Fig. 1 shows a perspective view (1A) of the optical measuring device for scanning the profiles of rotating objects on a CNC lathe, with a detailed image (1B) of the optical head in the first embodiment with one one-dimensional optical micrometer;
Fig. 2 shows a perspective view of the optical head in the second embodiment with two one-dimensional optical micrometers;
Fig. 3 shows a top view of the optical head in the second embodiment;
Fig. 4 is a schematic top view showing a method of scanning of the profile of the rotating object using the optical head in the second embodiment;
Fig. 5 shows a perspective view of the optical head in the third, fourth, or fifth embodiment with one continuously turnable, or step-by-step turnable, or permanently rotating one-dimensional optical micrometer;
Fig. 6 is a schematic top view showing the method of scanning of the profile of the rotating object using the optical head with the continuously turnable optical micrometer in the third embodiment;
Fig. 7 is a schematic top view showing a method of scanning the profile of the rotating object using the optical head with step-by-step turnable optical micrometer in the third embodiment;
Fig. 8 is a schematic top view (8A) showing the method of scanning the profile of the rotating object using the optical head with the permanently rotating optical micrometer in the fifth embodiment, with a detailed image (8B);
Fig. 9 is a sagittal sectional view (9A), top view (9B) with a detailed image (9C), and a perspective view (9D) with a detailed image (9E) showing the optical head in the sixth embodiment with one optical micrometer with two crossed measuring planes;
Fig. 10 is a sagittal sectional view (10A), top view (10B) with a detailed image (10C), and a perspective view (10D) with a detailed image (10E) showing the optical head in the seventh embodiment with one optical micrometer with four crossed measuring planes; and
Fig. 11 is a sagittal sectional view (11A), top view (11B) with a detailed image (11C), and a perspective view (11D) with a detailed image (11E) showing the optical head in the eighth embodiment with one optical micrometer with areal evaluation.

### Exemplary Embodiments of the Invention

The invention will be further clarified using exemplary embodiments with reference to the respective drawings. Said embodiments show exemplary variants of the embodiments of the invention, which, however, have no limiting effect in terms of the scope of protection. The scope of protection of the invention is only limited by the appended claims.

### Example 1

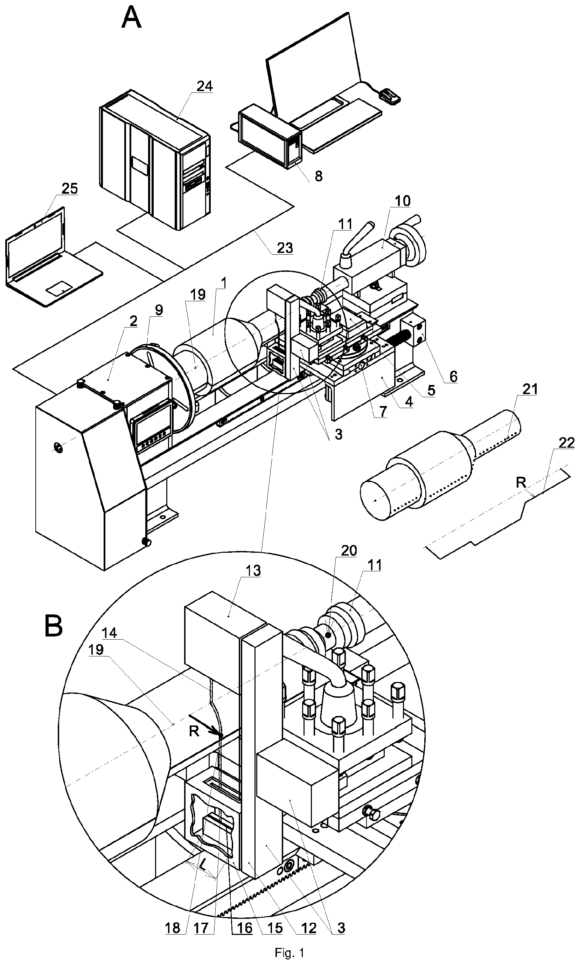

In the first embodiment of this invention in Fig. 1, an optical measuring device for non-contact scanning of profiles of rotating objects 1 on a program-controlled machine tool 2, in this case a CNC lathe, is shown. This device is composed of an optical head 3 mounted on a carrier frame 4 of the CNC lathe and an evaluation unit 5 that powers and communicates with the optical head 3 and reads sensors 6 of the position of longitudinal displacement and sensors 7 of the position of transverse displacement of the carrier frame 4. Furthermore, the evaluation unit 5 is connected a computer 8 with software for visualization of the measured data and setting the current specification of the measured object. The mounted measured rotating object 1 is gripped from one side in the chuck 9 and is supported from the other side using a tailstock 10. On the tailstock of the CNC lathe, a gauge 11 for calibration of the optical head 3 is located.

The optical head 3 in the first embodiment comprises one one-dimensional optical micrometer 12 that is composed of a transmitter 13 (light source) of a collimated beam 14 of rays illuminating a receiver 15 most commonly composed of a CCD or CMOS line sensor 16. The system of at least one optical micrometer 12 with a communication and power interface, protective case, and lug form the optical head 3. The optical micrometer 12 is oriented vertically so that the angle between the measuring plane defined by the flat, oriented, collimated beam 14 of rays and the sensor 16 is as close to the angle of 90° relative to the measured surface of the rotating object 1 as possible. During the scanning, the beam 14 of rays of the transmitter 13 is partially shaded by the rotating object 1 from the side of the rotation axis 19, wherein the edge 17 of the transition of the incident light and the shade identified on the sensor 16 is evaluated. This edge 17 represents the distance of a point 18 on the surface of the measured rotating object 1 from the relative origin of the sensor 16. The distance is converted using data from the sensors 6, 7 of the position of longitudinal and transverse displacement of the carrier frame 4 and from pre-performed calibration to the absolute position of the point 18 relative to an initial scanning point 20. The distance of the point 18 from the rotation axis 19 represents the radius *R* of the measured object in the given point 18.

By repeated scanning during the positioning of the optical head 3 along the surface of the rotating object 1 so that the collimated beam 14 of rays of a measuring range L of the optical micrometer 12 is always partially shaded by the rotating object 1 from the side of the rotation axis 19, a set 21 of points 18 is formed - scan representing a profile 22 of the measured object 1.

The software of the computer 8 is, via a computer network 23, connected to a database SQL server 24, from which it reads the specification of the required dimensions of the rotating object 1 and saves the measured data in it. Network computers 25 are also connected to the SQL server 24 via the computer network 23, with software for inputting the required dimensions and drawing of the profile of the object 1, and are also used to analyze the scanned data and measured results.

### Example 2

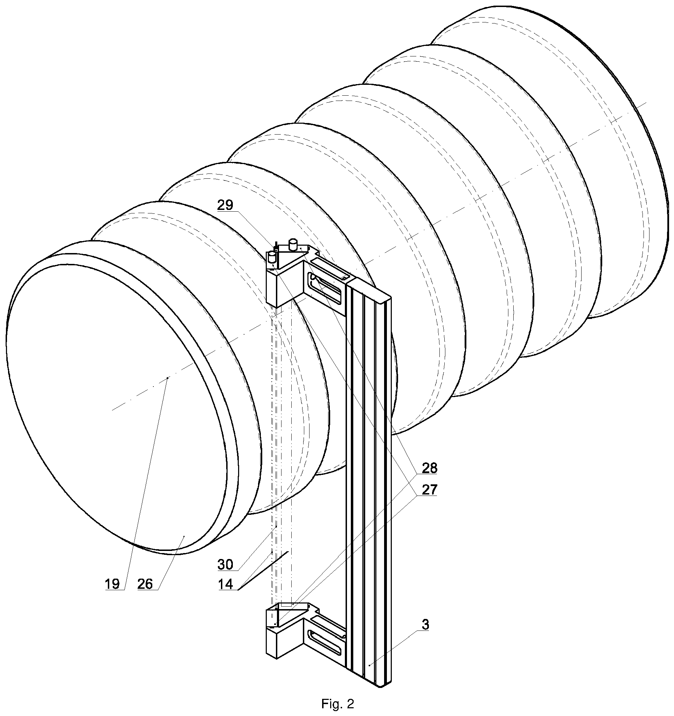

In the second embodiment of this invention of Fig. 2, the optical head 3 is shown with two one-dimensional optical micrometers 12, which is suitable for measuring large cylinders 26 that represent the measured rotating object 1. The left optical micrometer 27 has the measuring plane turned by 45° relative to the rotation axis 19, and the right optical micrometer 28 by -45°. The optical head 3 is provided with an optical aiming device 29 composed of a visible laser ray 30. It is used for the automated process of scanning and calibration, where the operator of the program-controlled machine tool 2, e.g. a CNC lathe, first moves the displacement to the initial position so that the laser illuminates the initial mark or prescribed edge of the measured rotating object 1 or gauge 11.

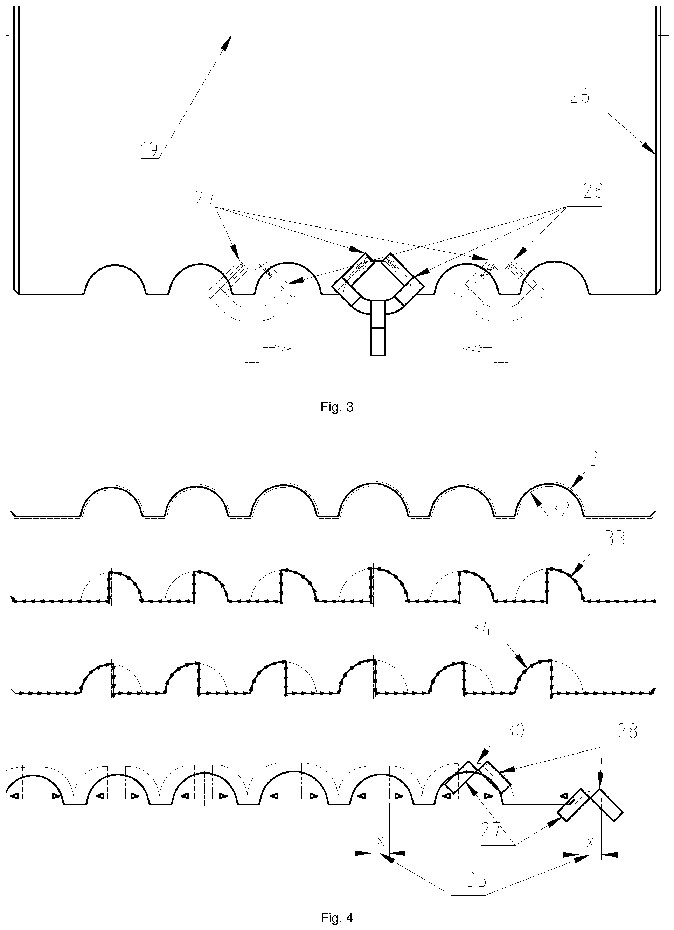

The scanning of the profile is performed in two stages (see Fig. 3 and Fig. 4), wherein sub-areas 31 and 32, respectively, of the profile are scanned separately using the left 27 and right optical micrometer 28, respectively, depending on what angle the measuring plane of the optical micrometer 27, 28 forms with the measured surface, wherein the angle must not exceed an interval of ±45° from the perpendicular. The path of the displacement is also adapted to this method, which in the case of the path 33 of displacement to the left is oriented to the left optical micrometer 27 and in the case of the path 34 of displacement to the right is oriented to the right optical micrometer 28. Both displacements 33, 34 correspond to the shifted curves of the profile of the measured sub-areas 31, 32, which correspond to a distance 35 of mutual displacement of the centers of the ranges of both receivers. During the scanning, the optical head 3 is displaced only in one direction 33 or 34 to minimize the effect of insensitivity of carriage of the object depending on whether it scans the left 27 or the right optical micrometer 28. The obtained portions of images of the profile are, based on the data from the calibration, connected in the computer 8 using a specially designed program.

### Example 3

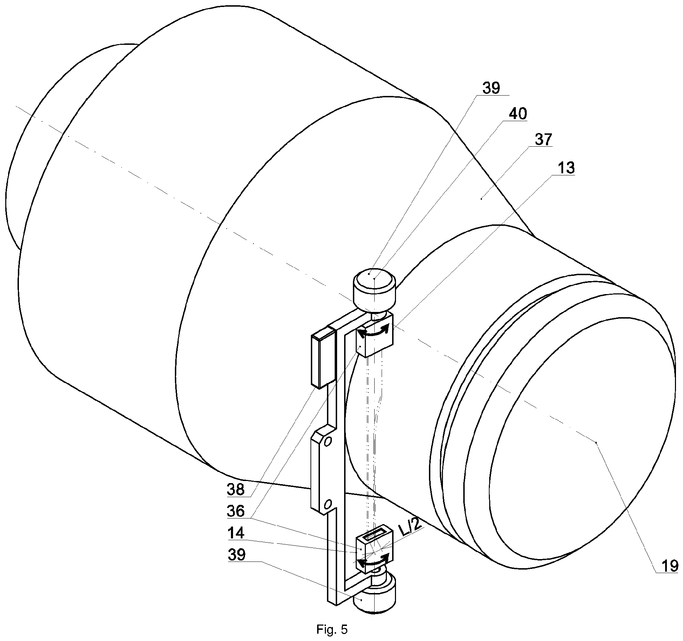

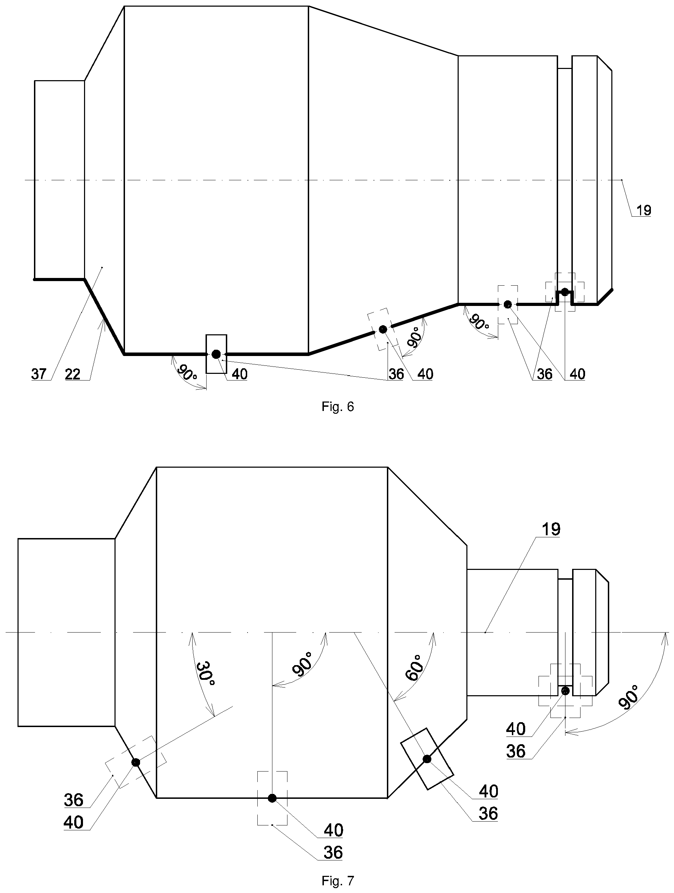

In the third embodiment of this invention of Fig. 5, the optical head 3 is shown with one continuously turnable optical micrometer 36, and it is suitable for measuring larger shafts 37 or object of the shape of the rotating body 1. As is shown in Fig. 6, the optical micrometer 36, or the measuring plane of the micrometer is turned around the axis 40 passing through the center of the measuring range *L*/2 via a precise feedback drive 39 parallel to the collimated beam 14 of rays at an angle of 0° to 180° relative to the rotation axis 19. The transmitter 13 of the collimated beam 14 of rays is turned synchronously with the receiver 15, or it is the source of areal light that forms the collimated beam 14 of rays with a polygonal, circular, or oval cross-section (so-called areal beam of rays), which illuminates the sensor 16 at all angles of turning. Based on the knowledge of the ideal profile 22 of the measured rotating object 1, e.g. a larger shaft 37, and the current position of the carrier frame 4, the control module 38 predictively turns the optical micrometer 36 via the precise drive 39 so that the measuring plane is oriented perpendicular to the scanned profile 22 of the surface. The CNC program positions the optical head 3 along the curve so that at the current angle of turning, the edge 17 of the cast shadow of the measured area falls on the receiver 16 as close to a half of the measuring range *L*/2 of the optical micrometer 36 as possible.

### Example 4

In the fourth embodiment of this invention of Fig. 5, the optical head 3 is shown with one, step-by-step turnable optical micrometer 36 that is turned relative to the rotation axis 19 via the precise feedback drive 39 at prescribed angles of 0°, ±30°, ±60°, ±90°, as is shown in Fig. 7. The control system of position of the carrier frame 4 of the program-controlled machine tool 2, e.g. a CNC lathe, indirectly controls the angle of turning of the optical micrometer 36 via changes of direction of displacement of the carrier frame 4. The scanning is performed in only one direction along the rotation axis 19, and if the direction of the displacement is changed, the control module 38 of the optical head 3 responds to it by turning the optical micrometer 36 to a new position. The size of the new angle of turning of the sensor 16 is communicated by the carrier frame 4 via the ratio of the paths of longitudinal and transverse displacement. To eliminate insensitivity, when changing the direction, the path is always slightly dragged by a fixed distance, and also, the measurement record is activated only after the displacement is returned back by this value.

### Example 5

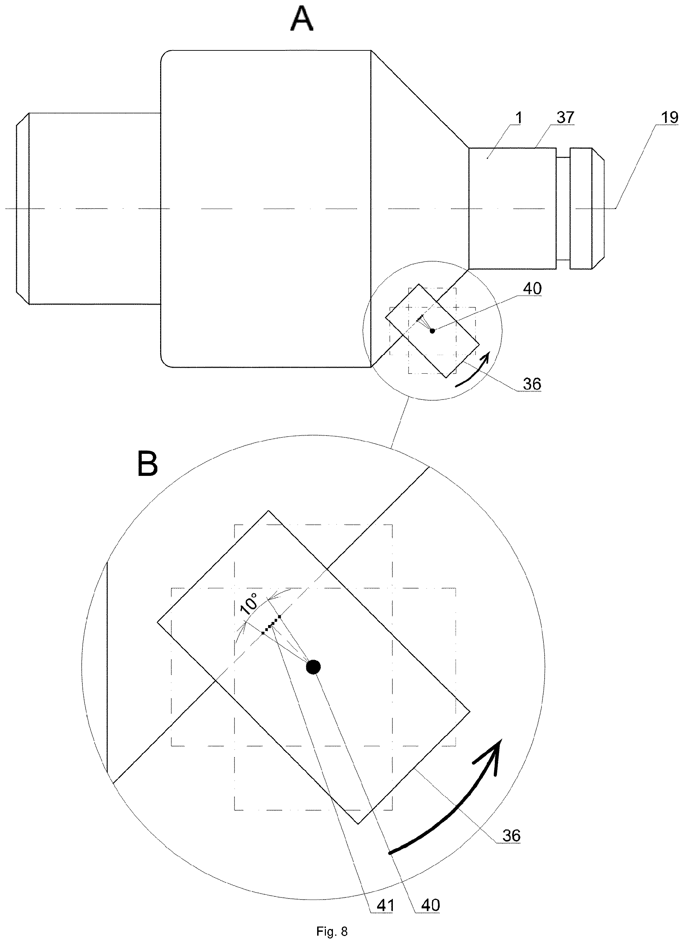

In the fifth embodiment of this invention of Fig. 5, the optical head 3 is shown with one permanently rotating optical micrometer 36 that, via the precise feedback drive 39, permanently turns around the axis 40 passing through the center of the measuring range *L*/2 parallel to the collimated beam 14 of rays. During one revolution, a series of repeated measurements are performed with precise synchronization of the angle of turning. From these points, only the points that are the closest to the axis 40 of turning in the sector of a maximum of 10° are filtered, as is shown in Fig. 8. The CNC program positions the carrier frame 4 with the optical head 3 so that the axis 40 of turning of the optical micrometer 36 circumscribes the curve of the ideal profile 22 of the rotating object 1, e.g. the larger shaft 37. With the knowledge of the position of the axis 40 of turning and the angle of turning of the sensor 16, the filtered points 41 are converted into a common coordinate system, where they subsequently represent a portion of the scan of the profile 22. From the set of these portions, the whole profile 22 of the rotating object 1 is put together. The turning of the optical micrometer 36 may be replaced by an oscillation of ±180°.

### Example 6

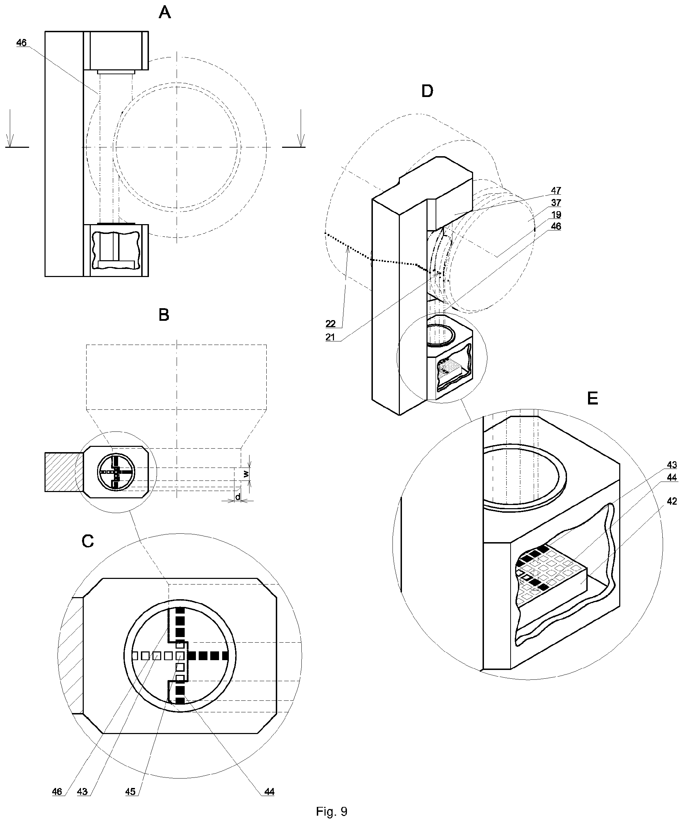

In the sixth embodiment of this invention of Fig. 9, the optical head 3 is shown with one optical micrometer 12 with two crossed measuring planes, which is suitable for measuring the profile of the shafts 37 or other rotating objects 1 of smaller dimensions. One measuring plane is perpendicular and the other is parallel to the rotation axis 19 of the measured rotating object 1. In this variant, the receiver 15 is the matrix CCD/CMOS sensor 42, of which two rows 43, 44 of the CCD/CMOS photosensitive cells crossing in the center 45 of the sensor are primarily used. Each of these rows is evaluated separately as two line CCD/CMOS sensors 16. Both rows are simultaneously illuminated by the areal collimated beam 46 of rays of one transmitter 13 in the form of an areal light source 47. The CNC program positions the carrier frame 4 with the optical head 3 mounted so that the axis parallel to the areal collimated beam 46 of rays passing through the center 45 of both rows 43, 44 of the matrix CCD/CMOS sensor 42 circumscribes the curve of the ideal profile 22 of the measured rotating object 1. From the knowledge of the ideal profile 22, the datum from the perpendicular row 43 or the parallel row 44 is read depending on which row is closer to the perpendicular to the scanner profile 22. The optical micrometer 12 may be also used as two independent optical micrometers 12, where, for example, one measures the width wand the other the depth *d* of the groove.

### Example 7

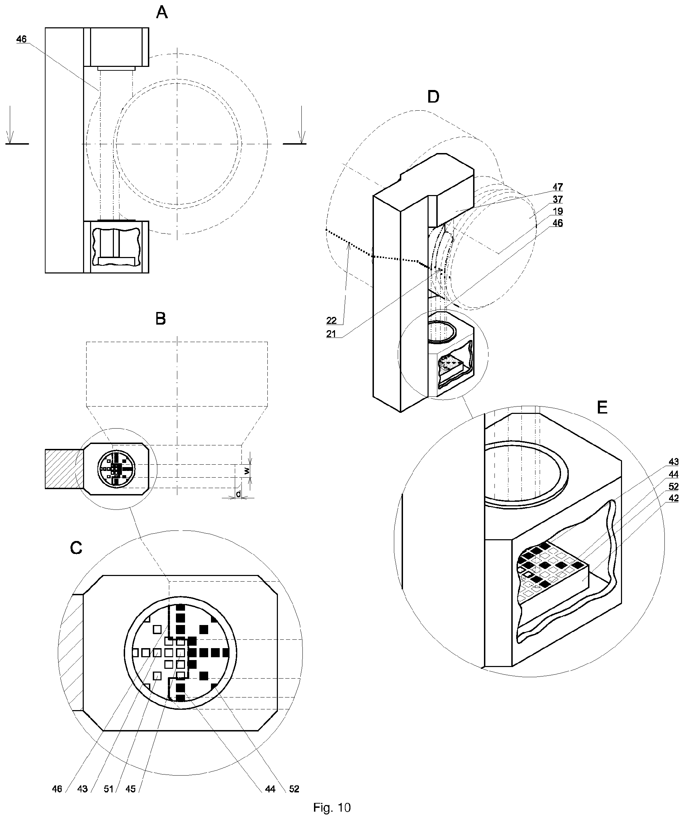

In the seventh embodiment of this invention of Fig. 10, the optical head 3 is shown with one optical micrometer 12 with four crossed measuring planes, which is suitable for measuring the profile of the shafts 37 or other rotating objects 1 of smaller dimensions. One measuring plane is perpendicular and the other is parallel to the rotation axis 19 of the measured rotating object 1. The other two are diagonal at angles of ±45°. This embodiment has one receiver 15 composed of the matrix CCD/CMOS sensor 42, from which two direct rows 43, 44 of the CCD/CMOS photosensitive cells and two diagonal rows 51, 52 of the CCD/CMOS photosensitive cells crossing in the center 45 of the sensor are primarily used. All rows are simultaneously illuminated by the collimated beam 14 of rays with a polygonal, circular, or oval cross-section (so-called areal beam of rays) of one transmitter 13 in the form of the areal light source 47. Each of these rows is evaluated separately as a line CCD/CMOS sensor 16. The CNC program positions the carrier frame 4 with the optical head 3 mounted so that the axis parallel to the collimated beam 14 of rays passing through the center 45 of rows 43, 44, 51, 52 of the matrix CCD/CMOS sensor 42 circumscribes the curve of the ideal profile 22 of the measured object 1, e.g. the larger shaft 37. Based on the knowledge of the ideal profile 22, the data from rows 43, 44, 51, 52 is evaluated depending on which row, or its measuring plane, is oriented closer to the perpendicular to the scanned surface 22. Based on the pre-performed calibration and with the knowledge of the position of the carrier frame 4, the data from the selected rows 43, 44, 51, 52 are converted into the set 21 of points18 located on the profile 22 of the rotating object 1. From the set of these points 18, the whole profile 22 is put together. Each of the rows may also be used as an independent optical micrometer 12, where the row 44 parallel to the rotation axis 19 evaluates the width wand the perpendicular row 43 evaluates the depth dof the groove.

### Example 8

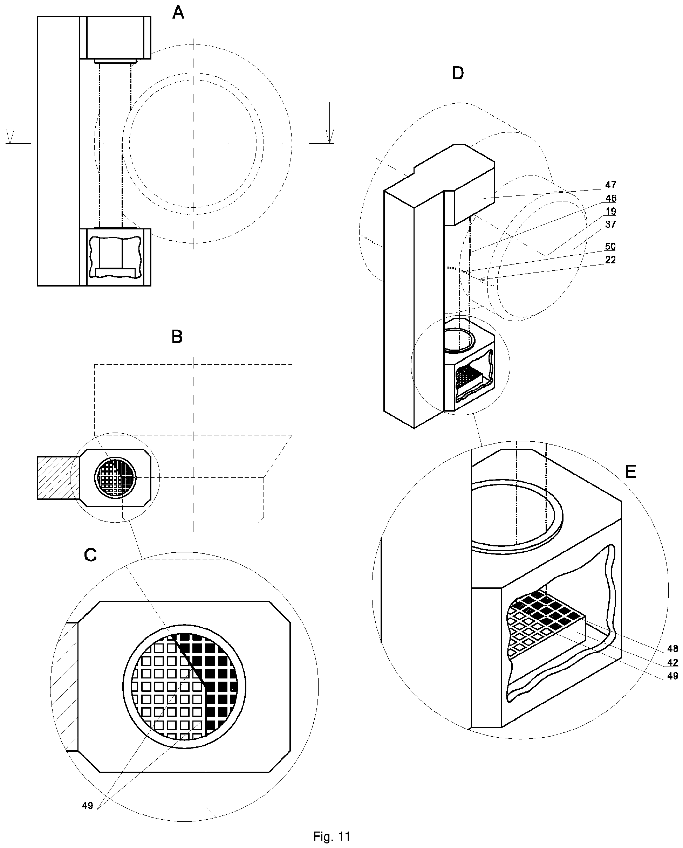

In the eighth embodiment of this invention of Fig. 11 , the optical head 3 is shown with one optical micrometer 12 with areal evaluation, where, compared to the sixth or seventh embodiment, all or selected rows 48 are used by the crossed measuring planes on the matrix CCD/CMOS sensor 42 in the longitudinal or transverse or both directions of the whole matrix of the CCD/CMOS photosensitive cells. The optical micrometer 12 comprises a transmitter 13 in the form of the areal light source 47. Each row 48 is evaluated separately as one line CCD/CMOS sensor 16. From individual edges 49 of the shadow cast on individual rows, a set 50 of points representing a portion of the profile is evaluated, and from the set 50 of these portions, the whole profile 22 of the measured rotating object 1 is put together. The CNC program positions the carrier frame 4 with the optical head 3 mounted so that the center 45 of the area of the matrix CCD/CMOS sensor 42 circumscribes the curve of the ideal profile 22 of the measured rotating object 1.

### Industrial Applicability

The above-described method of non-contact scanning of profiles of rotating objects and evaluation of their external dimensions may be utilized in automation of engineering production on program-controlled machine tools, especially CNC lathes. Said method is applicable to manufacturers of machine rotating parts with a high share of production automation, such as shafts, rotors, half-shafts, bushings, pins, automotive parts, drives, machine parts, etc. Said method is applicable to manufacturers and maintenance of large machine rotary parts, especially shafts and cylinders.

### List of Reference Signs

- 1: Rotating object
- 2: Program-controlled machine tool
- 3: Optical head
- 4: Carrier frame
- 5: Evaluation unit
- 6: Sensor of longitudinal displacement of the carrier frame
- 7: Sensor of transverse displacement of the carrier frame
- 8: Computer
- 9: Chuck
- 10: Tailstock
- 11: Gauge
- 12: Optical micrometer
- 13: Transmitter
- 14: Collimated beam of rays
- 15: Receiver
- 16: Line CCD/CMOS sensor
- 17: Edge of the shadow transition and the incident collimated beam of rays
- 18: Point on the surface of the rotating object
- 19: Rotation axis
- 20: Initial scanning point
- 21: Set of points on the surface of the rotating object
- 22: Profile of the rotating object
- 23: Computer network
- 24: SQL server
- 25: Network computer
- 26: Cylinder
- 27: Left optical micrometer
- 28: Right optical micrometer
- 29: Optical aiming device
- 30: Visible laser ray
- 31: Sub-area of the profile scanned by the left optical micrometer
- 32: Sub-area of the profile scanned by the right optical micrometer
- 33: Path of displacement of the optical micrometer to the left
- 34: Path of displacement of the optical micrometer to the right
- 35: Distance of mutual displacement of the centers of the ranges of both receivers
- 36: Turnable optical micrometer
- 37: Shaft
- 38: Control module of turning of the optical micrometer
- 39: Precise drive of turning of the optical micrometer
- 40: Axis of turning of the optical micrometer
- 41: Filtered points
- 42: Matrix CCD/CMOS sensor
- 43: Direct row of photosensitive cells of the matrix CCD/CMOS sensor perpendicular to the rotation axis
- 44: Direct row of photosensitive cells of the matrix CCD/CMOS sensor parallel to the rotation axis
- 45: Centre of the matrix CCD/CMOS sensor
- 46: Areal collimated beam of rays
- 47: Areal light source
- 48: All or selected rows of photosensitive cells of the matrix CCD/CMOS sensor
- 49: Edges of the shadow transition and the incident areal collimated beam of rays
- 50: Set of points on the surface of the rotating object evaluated from the edges of the areal collimated beam of rays
- 51: Diagonal row of photosensitive cells of the matrix CCD/CMOS sensor forming an angle of -45° with the rotation axis
- 52: Diagonal row of photosensitive cells of the matrix CCD/CMOS sensor forming an angle of +45° with the rotation axis
- *L*: measuring range of the optical micrometer
- *R*: distance of the point on the surface of the rotating object from the rotation axis

## Claims

1. A method of non-contact scanning of profiles of rotating objects (1, 26, 37) and evaluation of their external dimensions on a device, particularly directly on a program-controlled machine tool or on a separate measuring device, using an optical head (3) having at least one optical micrometer (12) of the "thru-beam" type that comprises a transmitter (13) and a receiver (15) of at least one collimated beam (14) of rays, wherein the receiver (15) comprises at least one row (43, 44, 48, 51, 52) of photosensitive cells of a CCD/CMOS sensor (16, 42), and using an evaluation unit (5), wherein the rotating object (1, 26, 37) defined by its surface and a rotation axis (19) is mounted turnably around the rotation axis (19) in the device,
whereby the method comprises the steps of:
a. providing the device with the mounted rotating object (1, 26, 37) with the optical head (3) positionable in the scanning plane that comprises the rotation axis (19);
b. selecting an initial scanning point (20) located on the rotation axis (19) and determining its position relative to the optical head (3); wherein the initial scanning point (20) is determined during a calibration of the position of the optical head (3), and said calibration is performed so that the at least one optical micrometer (12) is displaced during the scanning along the profile of a gauge (11) of known dimensions and shape and with the rotation axis being parallel or identical to the rotation axis (19) of the rotating object (1, 26, 37), wherein the initial scanning point (20) and the position of the optical micrometer (12) relative to it are evaluated from the scanned profile of the gauge (11) on the rotation axis (19);
c. determining at least one measuring plane of the at least one optical micrometer (12), wherein said measuring plane is defined by the collimated beam (14) of rays and at least one row (43, 44, 48, 51, 52) of photosensitive cells of the CCD/CMOS sensor (16) in the receiver (15) at an angle of 90° ± 45° relative to the surface of the rotating object (1, 26, 37), and evaluating the angle relative to the rotation axis (19);
d. scanning a point (18) or points (18, 50) on the surface of the rotating object (1, 26, 37) in the measuring plane by the at least one collimated beam (14) of rays of the optical micrometer (12) such that the receiver (15) is partially shaded by the rotating object (1, 26, 37) during the scanning, thereby projecting said point (18) or points (18, 50) into at least one edge (17, 49) of the shadow transition and the incident collimated beam (14) of rays on the receiver (15), wherein each point (18, 50) in the measuring plane is represented on the receiver (15) by an edge (17, 49) in the scanning plane perpendicular to the measuring plane;
e. evaluating the distance R of the point (18) or points (18, 50) on the surface of the rotating object (1, 26, 37) from the rotation axis (19) and evaluating the position of the point (18) or points (18, 50) on the surface of the rotating object (1, 26, 37) relative to the initial scanning point (20) on the rotation axis (19) using the evaluation unit (5), wherein the distance *R* as well as the position of the point (18) or points (18, 50) on the surface of the rotating object (1, 26, 37) relative to the initial scanning point (20) is evaluated based on the distance of the edge (17, 49) and the relative position of the initial point of the receiver (15) relative to the initial scanning point (20) on the rotation axis (19) and based on data about the position of the optical head (3) relative to the rotation axis (19), wherein these data comprise data from a sensor (6) of longitudinal displacement and a sensor (7) of transverse displacement of a carrier frame (4) and data about the angle of turning of the measuring plane according to step c); wherein each row (43, 44, 48, 51, 52) of the CCD/CMOS sensor is evaluated separately as a one line CCD/CMOS sensor;
f. moving the optical head (3) in the longitudinal and/or transverse direction relative to the surface of the rotating object (1, 26, 37), determining its position relative to the initial scanning point (20), and repeating steps c), d), and e), wherein the optical head (3) is positioned in the longitudinal and/or transverse direction using the longitudinal displacement and transverse displacement of the carrier frame (4) on which the optical head (3) is mounted; and
g. obtaining a set (21) of points (18, 50) on the surface of the rotating object (1, 26, 37) in the scanning plane and evaluating the shape of the profile (22) of the rotating object (1, 26, 37).

2. The method according to the preceding claim,
**characterized in that** the edge (17, 49) of the shadow transition and the perpendicularly incident collimated beam (14) of rays is scanned using photosensitive cells on the area of the receiver (15) composed of a line CCD/CMOS sensor (16) or a matrix CCD/CMOS sensor (42).

3. The method according to any one of the preceding claims, **characterized in that** the angle of the measuring plane of the optical micrometer (12, 36) relative to the surface of the rotating object (1, 26, 37) is changed during the scanning step by step or continuously.

4. The method according to claim 3, **characterized in that** the receiver (15) and/or the transmitter (13) of the collimated beam (14) of rays is turned around the axis (40) of turning of the optical micrometer (12, 36) using a precise feedback drive (39).

5. The method according to any one of the preceding claims, **characterized in that** the collimated beam (14) of rays is an areal collimated beam (46) of rays incident on the matrix CCD/CMOS sensor (42).

6. The method according to any one of the preceding claims, **characterized in that** the optical head (3) is displaced during the scanning in the first longitudinal direction relative to the rotation axis (19), wherein for the movement of the optical head (3) in the second, opposite longitudinal direction, the scanning is interrupted, then the optical head (3) is moved in the second longitudinal direction beyond the initial scanning position, and subsequently, the optical head (3) is moved to the initial scanning position in the first longitudinal direction.

7. The method of any one of the preceding claims, **characterized in that** the rotating object (1, 26, 37) is turned during the scanning around the rotation axis (19).

8. The method according to any one of the preceding claims, **characterized in that** the measuring plane of the optical micrometer (12) is set using a visible laser ray (30) from an optical aiming device (29) mounted on the optical head (3).

9. The method according to any one of the preceding claims, **characterized in that** the rotating object (1, 26, 37) is scanned by a pair of optical micrometers (12) in two measuring planes with a pair of collimated beams (14) of rays, wherein the edges (17) of the shadow transition and the incident collimated beams (14) of rays are scanned using a pair of receivers (15) composed of line CCD/CMOS sensors (16), wherein both measuring planes are set at angles of ±45° relative to the rotation axis (19), and these measuring planes form an angle of 90°, wherein in the first measuring plane, the surface of the rotating object (1, 26, 37) is scanned in the first longitudinal direction and in the second measuring plane, the surface of the rotating object (1, 26, 37) is scanned in the second, opposite longitudinal direction.

10. The method according to any one of the preceding claims, **characterized in that** the rotating object (1, 26, 37) is scanned by at least two optical micrometers (12) in at least two crossed measuring planes, wherein each measuring plane is defined by the collimated beam (14) of rays and the row (43, 44, 48, 51, 52) of photosensitive cells on the surface of the receiver (15) composed of one matrix CCD/CMOS sensor (42), wherein the edges (17, 49) of the shadow transition and the incident collimated beams (14) of rays are scanned using individual rows (43, 44, 48, 51, 52) of photosensitive cells of the measuring planes.

11. The method according to claim 10, **characterized in that** the surface of the rotating object (1, 26, 37) is gradually scanned firstly by the first, then by the second, or then by each subsequent one of the group of optical micrometers (12), or the surface of the rotating object (1, 26, 37) is scanned by all the optical micrometers (12) simultaneously, wherein to evaluate the shape of the profile (22) of the rotating object (1, 26, 37), the sets (21) of points (18, 50) obtained from individual optical micrometers are combined.

12. The method according to claims 1 to 11, **characterized in that** the optical head (3) is mounted on the carrier frame (4) of the program-controlled machine tool (2), preferably a CNC lathe, and the rotating object (1, 26, 37) is mounted on the program-controlled machine tool (2) using a chuck (9) and/or a tailstock (10), wherein the gauge (11) is integrated into the chuck (9) or the tailstock (10), wherein the position of the optical head (3) is evaluated using integrated position sensors of the program-controlled machine tool (2).

13. The method according to claims 1 to 11, **characterized in that** the optical head (3) is mounted on the carrier frame (4), wherein it forms a separate measuring device.

14. A measuring device for non-contact scanning of a profile of a rotating object (1, 26, 37) that is defined by its surface and a rotation axis (19) mounted turnably around the rotation axis in a device and for evaluating external dimensions of the rotating object directly on a program-controlled machine tool or for use as a separate measuring device,
whereby the measuring device comprises an optical head (3), a carrier frame (4), an evaluation unit (5), sensors (6) of longitudinal displacement and further sensors (7) of transverse displacement of the carrier frame (4) and whereby the measuring device is adapted to perform the method of any one of the preceding claims,
whereby the positionable optical head (3) is mounted on the carrier frame (4) of the measuring device,
the positionable optical head (3) having at least one optical micrometer (12, 36) of the "thru-beam" type that comprises a transmitter (13) and a receiver (15) of at least one collimated beam (14) of rays, wherein the receiver comprises at least one row (43, 44, 48, 51, 52) of photosensitive cells of a CCD/CMOS sensor (16, 42), wherein the at least one collimated beam (14) and the at least one row of photosensitive cells of the CCD/CMOS sensor form at least one measuring plane for scanning the surface of the rotating object (1, 26, 37) with the at least one measuring plane at an angle of 90° ± 45° relative to the surface of the rotating object (1, 26, 37), wherein the receiver (15) is provided on its area with a line CCD/CMOS sensor (16) or a matrix CCD/CMOS sensor (42) for scanning at least one edge (17, 49) of a shadow transition and the incident collimated beam (14) of rays, wherein each edge (17, 49) is a projection of a point (18) or points (18, 50) on the surface of the rotating object (1, 26, 37), and wherein said optical micrometer is adapted to have each row (43, 44, 48, 51, 52) of said CCD/CMOS sensor (16, 42) evaluated separately as a one line CCD/CMOS sensor.

## Patentansprüche

1. Ein Verfahren für berührungslosen Abtasten von Profilen von rotierenden Objekten (1, 26, 37) und Auswertung ihrer äußeren Dimensionen auf einer Einrichtung, insbesondere direkt auf einer programmgesteuerten Werkzeugmaschine oder auf einer separaten Messeinrichtung, unter Verwendung eines optischen Kopfes (3) mit mindestens einem optischen Mikrometer (12) des "Thru-Beam"-Typs, der einen Sender (13) und einen Empfänger (15) mindestens eines kollimierten Strahlenbündels (14) umfasst, wobei der Empfänger (15) mindestens eine Reihe (43, 44, 48, 51, 52) von lichtempfindlichen Zellen eines CCD/CMOS-Sensors (16, 42) umfasst, und unter Verwendung einer Auswerteeinheit (5), wobei das rotierende, durch seine Oberfläche und eine Drehachse (19) definierte Objekt (1, 26, 37) drehbar um die Drehachse (19) in der Einrichtung gelagert ist, wobei das Verfahren die folgenden Schritte umfasst:
a. das Bereitstellen der Einrichtung mit dem angebrachten rotierenden Objekt (1, 26, 37) mit dem in der Abtastebene positionierbaren optischen Kopf (3), die die Drehachse (19) umfasst,
b. das Auswählen eines sich auf der Drehachse (19) befindlichen Anfangsabtastpunktes (20) und das Bestimmen seiner Position relativ zum optischen Kopf (3); wobei der Anfangsabtastpunkt (20) während einer Kalibrierung der Position des optischen Kopfes (3) bestimmt wird, und die Kalibrierung so durchgeführt wird, dass das mindestens ein optische Mikrometer (12) während der Abtastung entlang des Profils einer Messlehre (11) bekannter Abmessungen und Form verschoben wird und wobei die Rotationsachse parallel oder identisch zu der Drehachse (19) des rotierenden Objekts (1, 26, 37) ist, wobei der Anfangsabtastpunkt (20) und die Position des optischen Mikrometers (12) relativ zu diesem aus dem abgetasteten Profil der Messlehre (11) auf der Drehachse (19) ausgewertet werden,
c. das Bestimmen mindestens einer Messebene des mindestens einen optischen Mikrometers (12), wobei die Messebene durch den kollimierten Strahlenbündel (14) und mindestens eine Reihe (43, 44, 48, 51, 52) von lichtempfindlichen Zellen des CCD/CMOS-Sensors (16) in dem Empfänger (15) in einem Winkel von 90° ± 45° relativ zur Oberfläche des rotierenden Objekts (1, 26, 37) definiert wird, und das Auswerten des Winkels relativ zur Rotationsachse (19);
d. das Abtasten eines Punktes (18) oder Punkten (18, 50) auf der Oberfläche des rotierenden Objekts (1, 26, 37) in der Messebene durch den mindestens einen kollimierten Strahlenbündel (14) des optischen Mikrometers (12), so dass der Empfänger (15) während der Abtastung durch das rotierende Objekt (1, 26, 37) teilweise abgeschattet wird, wodurch der Punkt (18) oder Punkte (18, 50) in mindestens eine Kante (17, 49) des Schattenübergangs und des einfallenden kollimierten Strahlenbündels (14) auf dem Empfänger (15) projiziert wird, wobei jeder Punkt (18, 50) in der Messebene durch eine Kante (17, 49) in der Abtastebene senkrecht zur Messebene auf dem Empfänger (15) dargestellt wird,
e. das Auswerten des Abstands R des Punktes (18) oder Punkten (18, 50) auf der Oberfläche des rotierenden Objekts (1, 26, 37) von der Drehachse (19) und das Auswerten der Position des Punkts (18) oder Punkten (18, 50) auf der Oberfläche des rotierenden Objekts (1, 26, 37) relativ zu dem Anfangsabtastpunkt (20) auf der Drehachse (19) unter Verwendung der Auswerteeinheit (5), wobei der Abstand R sowie die Position des Punktes (18) oder Punkten (18, 50) auf der Oberfläche des rotierenden Objekts (1, 26, 37) relativ zu dem Anfangsabtastpunkt (20) basierend auf dem Abstand der Kante (17, 49) und auf der relativen Position des Anfangsabtastpunkts des Empfängers (15) relativ zu dem Anfangsabtastpunkt (20) auf der Drehachse (19), und basierend auf Daten über die Position des optischen Kopfes (3) relativ zu der Drehachse (19) bewertet wird, wobei diese Daten Daten von einem Sensor (6) einer Längsverschiebung und einem Sensor (7) einer Querverschiebung eines Trägerrahmens (4) und Daten über den Drehwinkel der Messebene gemäss Schritt c) umfassen; wobei jede Reihe (43, 44, 48, 51, 52) des CCD/CMOS-Sensors separat als ein Reihen-CCD/CMOS-Sensor ausgewertet wird,
f. das Bewegen des optischen Kopfes (3) in Längs- und/oder Querrichtung relativ zur Oberfläche des rotierenden Objekts (1, 26, 37), das Bestimmen seiner Position relativ zum Anfangsabtastpunkt (20), und das Wiederholen der Schritte c), d) und e), wobei der optische Kopf (3), unter Verwendung der Längsverschiebung und Querverschiebung des Trägerrahmens (4), auf dem der optische Kopf (3) angebracht ist, in Längs- und/oder Querrichtung positioniert ist; und
g. das Erhalten eines Satzes (21) von Punkten (18, 50) auf der Oberfläche des rotierenden Objekts (1, 26, 37) in der Abtasteben und das Auswerten der Form des Profils (22) des rotierenden Objekts (1, 26, 37).

2. Das Verfahren nach dem vorhergehenden Anspruch, **dadurch gekennzeichnet, dass** die Kante (17, 49) des Schattenübergangs und der senkrecht einfallende kollimierte Strahlenbündel (14) unter Verwendung lichtempfindlichen Zellen auf dem Bereich des Empfängers (15) abgetastet wird, der aus einem Reihen-CCD/CMOS-Sensor (16) oder einem Matrix-CCD/CMOS-Sensor (42) besteht.

3. Das Verfahren nach einem der vorhergehenden Ansprüche, **dadurch gekennzeichnet, dass** der Winkel der Messebene des optischen Mikrometers (12, 36) relativ zur Oberfläche des rotierenden Objekts (1, 26, 37) während des Abtastschritts schrittweise oder kontinuierlich verändert wird.

4. Das Verfahren nach Anspruch 3, **dadurch gekennzeichnet, dass** der Empfänger (15) und/oder der Sender (13) des kollimierten Strahlenbündels (14) um die Achse (40) der Drehung des optischen Mikrometers (12, 36) unter Verwendung eines präzisen Rückkopplungsantriebs (39) gedreht wird.

5. Das Verfahren nach einem der vorhergehenden Ansprüche, **dadurch gekennzeichnet, dass** der kollimierte Strahlenbündel (14) ein flächiger kollimierter Strahlenbündel (46) ist, der auf den Matrix-CCD/CMOS-Sensor (42) einfällt.

6. Das Verfahren nach einem der vorhergehenden Ansprüche, **dadurch gekennzeichnet, dass** der optische Kopf (3) während der Abtastung in der ersten Längsrichtung relativ zur Drehachse (19) verschoben wird, wobei für die Bewegung des optischen Kopfes (3) in der zweiten, entgegengesetzten Längsrichtung die Abtastung unterbrochen wird, dann der optische Kopf (3) in der zweiten Längsrichtung über die Anfangsabtastposition hinaus bewegt wird und anschließend der optische Kopf (3) in der ersten Längsrichtung in die Anfangsabtastposition bewegt wird.

7. Das Verfahren nach einem der vorhergehenden Ansprüche, **dadurch gekennzeichnet, dass** das rotierende Objekt (1, 26, 37) während der Abtastung um die Drehachse (19) gedreht wird.

8. Das Verfahren nach einem der vorhergehenden Ansprüche, **dadurch gekennzeichnet, dass** die Messebene des optischen Mikrometers (12) unter Verwendung eines sichtbaren Laserstrahls (30) von einer auf dem optischen Kopf (3) angebrachten optischen Zieleinrichtung (29) eingestellt wird.

9. Das Verfahren nach einem der vorhergehenden Ansprüche, **dadurch gekennzeichnet, dass** das rotierende Objekt (1, 26, 37) durch ein Paar optischer Mikrometer (12) in zwei Messebenen mit einem Paar kollimierter Strahlenbündel (14) abgetastet wird, wobei die Kanten (17) des Schattenübergangs und die einfallenden kollimierten Strahlenbündel (14) unter Verwendung eines Paares von Empfängern (15) abgetastet werden, die aus Reihen-CCD/CMOS-Sensoren (16) zusammengesetzt sind, wobei beide Messebenen unter Winkeln von ± 45° relativ zur Rotationsachse (19) angeordnet sind, und diese Messebenen einen Winkel von 90° bilden, wobei in der ersten Messebene, die Oberfläche des rotierenden Objekts (1, 26, 37) in der ersten Längsrichtung abgetastet wird, und in der zweiten Messebene, die Oberfläche des rotierenden Objekts (1, 26, 37) in der zweiten, entgegengesetzten Längsrichtung abgetastet wird.

10. Das Verfahren nach einem der vorhergehenden Ansprüche, **dadurch gekennzeichnet, dass** das rotierende Objekt (1, 26, 37) durch mindestens zwei optische Mikrometer (12) in mindestens zwei gekreuzten Messebenen abgetastet wird, wobei jede Messebene durch den kollimierten Strahlenbündel (14) und die Reihe (43, 44, 48, 51, 52) von lichtempfindlichen Zellen auf der Oberfläche des Empfängers (15) aus einem Matrix-CCD/CMOS-Sensor (42) definiert wird, wobei die Kanten (17, 49) des Schattenübergangs und die einfallenden kollimierten Strahlenbündel (14) unter Verwendung einzelner Reihen (43, 44, 48, 51, 52) von lichtempfindlichen Zellen der Messebenen abgetastet werden.

11. Das Verfahren nach Anspruch 10, **dadurch gekennzeichnet, dass** die Oberfläche des rotierenden Objekts (1, 26, 37) schrittweise zuerst durch die erste, dann durch die zweite oder dann durch jede nachfolgende der Gruppe optischer Mikrometer (12) abgetastet wird oder die Oberfläche des rotierenden Objekts (1, 26, 37) durch alle optischen Mikrometer (12) gleichzeitig abgetastet wird, wobei zur Auswertung der Form des Profils (22) des rotierenden Objekts (1, 26, 37) die aus einzelnen optischen Mikrometern erhaltenen Sätze (21) von Punkten (18, 50) kombiniert werden.

12. Das Verfahren nach den Ansprüchen 1 bis 11, **dadurch gekennzeichnet, dass** der optische Kopf (3) auf dem Trägerrahmen (4) der programmgesteuerten Werkzeugmaschine (2), vorzugsweise einer CNC-Drehmaschine, angebracht ist und das rotierende Objekt (1, 26, 37) mit einem Spannfutter (9) und/oder einem Reitstock (10) an der programmgesteuerten Werkzeugmaschine (2) gelagert ist, wobei die Messlehre (11) in das Spannfutter (9) oder den Reitstock (10) integriert ist, wobei die Position des optischen Kopfes (3) mit integrierten Positionssensoren der programmgesteuerten Werkzeugmaschine (2) ausgewertet wird.

13. Das Verfahren nach den Ansprüchen 1 bis 11, **dadurch gekennzeichnet, dass** der optische Kopf (3) auf dem Trägerrahmen (4) angebracht ist, wobei er eine separate Messeinrichtung bildet.

14. Eine Messeinrichtung zur berührungslosen Abtastung eines Profils eines rotierenden Objekts (1, 26, 37), das von seiner Oberfläche und von einer um die Drehachse in einer Einrichtung drehbar gelagerten Drehachse (19) definierten wird, und zur Auswertung externer Abmessungen des rotierenden Objekts direkt auf einer programmgesteuerten Werkzeugmaschine oder zur Verwendung als separate Messeinrichtung, wobei die Messeinrichtung einen optischen Kopf (3), einen Trägerrahmen (4), eine Auswerteeinheit (5), Sensoren (6) von Längsverschiebung und weitere Sensoren (7) zur Querverschiebung des Trägerrahmens (4) umfasst, und wobei die Messeinrichtung dazu eingerichtet ist, das Verfahren nach einem der vorhergehenden Ansprüche durchzuführen, wobei der positionierbare optische Kopf (3) an dem Trägerrahmen (4) der Messeinrichtung angebracht ist, wobei der positionierbare optische Kopf (3) mindestens ein optisches Mikrometer (12, 36) des "Thru-Beam"-Typs hat, der einen Sender (13) und einen Empfänger (15) mindestens eines kollimierten Strahlenbündels (14) aufweist, wobei der Empfänger mindestens eine Reihe (43, 44, 48, 51, 52) von lichtempfindlichen Zellen eines CCD/CMOS-Sensors (16, 42) umfasst, wobei der mindestens eine kollimierte Strahlenbündel (14) und die mindestens eine Reihe von lichtempfindlichen Zellen des CCD/CMOS-Sensors mindestens eine Messebene zum Abtasten der Oberfläche des rotierenden Objekts (1, 26, 37) mit der mindestens einen Messebene in einem Winkel von 90° ± 45° relativ zur Oberfläche des rotierenden Objekts (1, 26, 37) bilden, wobei der Empfänger (15) auf seinem Bereich mit einem Reihen-CCD/CMOS-Sensor (16) oder einem Matrix-CCD/CMOS-Sensor (42) zum Abtasten mindestens einer Kante (17, 49) eines Schattenübergangs und des einfallenden kollimierten Strahlenbündels (14) versehen ist, wobei jede Kante (17, 49) eine Projektion eines Punktes (18) oder von Punkten (18, 50) auf der Oberfläche des rotierenden Objekts (1, 26, 37) ist, und wobei der optische Mikrometer dazu eingerichtet ist, jede Reihe (43, 44, 48, 51, 52) des CCD/CMOS-Sensors (16, 42) separat als einen Reihen-CCD/CMOS-Sensor auszuwerten.

## Revendications

1. Un procédé de scannage sans contact de profils d'objets rotatifs (1, 26, 37) et d'évaluation de leurs dimensions externes sur un dispositif, en particulier directement sur une machine-outil commandée par programme ou sur un dispositif de mesure séparé, à l'aide d'une tête optique (3) ayant au moins un micromètre optique (12) du type barrage qui comprend un émetteur (13) et un récepteur (15) d'au moins un faisceau collimaté (14) de rayons, où le récepteur (15) comprend au moins une rangée (43, 44, 48, 51, 52) de cellules photosensibles d'un capteur CCD/CMOS (16, 42), et à l'aide d'une unité d'évaluation (5), où l'objet rotatif (1, 26, 37) défini par sa surface et un axe de rotation (19) est monté rotatif autour de l'axe de rotation (19) dans le dispositif,
où le procédé comprend les étapes consistant à :
a. disposer le dispositif avec l'objet rotatif monté (1, 26, 37) avec la tête optique (3) positionable dans le plan de scannage qui comprend l'axe de rotation (19) ;
b. sélectionner un point de scannage initial (20) situé sur l'axe de rotation (19) et déterminer sa position par rapport à la tête optique (3) ; où le point de scannage initial (20) est déterminé pendant un étalonnage de la position de la tête optique (3), et ledit étalonnage est effectué de telle sorte que l'au moins un micromètre optique (12) est déplacé pendant le scannage le long du profil d'une jauge (11) de dimensions et de forme connues et l'axe de rotation étant parallèle ou identique à l'axe de rotation (19) de l'objet rotatif (1, 26, 37), où le point de scannage initial (20) et la position du micromètre optique (12) par rapport à celui-ci sont évalués à partir du profil scanné de la jauge (11) sur l'axe de rotation (19) ;
c. déterminer au moins un plan de mesure de l'au moins un micromètre optique (12), où ledit plan de mesure est défini par le faisceau collimaté (14) de rayons et au moins une rangée (43, 44, 48, 51, 52) de cellules photosensibles du capteur CCD/CMOS (16) dans le récepteur (15) à un angle de 90° ± 45° par rapport à la surface de l'objet rotatif (1, 26, 37), et évaluer l'angle par rapport à l'axe de rotation (19) ;
d. scanner un point (18) ou des points (18, 50) sur la surface de l'objet rotatif (1, 26, 37) dans le plan de mesure par l'au moins un faisceau collimaté (14) de rayons du micromètre optique (12) de telle sorte que le récepteur (15) est partiellement ombré par l'objet rotatif (1, 26, 37) pendant le scannage, projetant ainsi ledit point (18) ou les points (18, 50) dans au moins un bord (17, 49) de la transition d'ombre et le faisceau collimaté incident (14) de rayons sur le récepteur (15), où chaque point (18, 50) dans le plan de mesure est représenté sur le récepteur (15) par un bord (17, 49) dans le plan de scannage perpendiculaire au plan de mesure ;
e. évaluer la distance *R* du point (18) ou des points (18, 50) sur la surface de l'objet rotatif (1, 26, 37) à partir de l'axe de rotation (19) et évaluer la position du point (18) ou des points (18, 50) sur la surface de l'objet rotatif (1, 26, 37) par rapport au point de scannage initial (20) sur l'axe de rotation (19) à l'aide de l'unité d'évaluation (5), où la distance R ainsi que la position du point (18) ou des points (18, 50) sur la surface de l'objet rotatif (1, 26, 37) par rapport au point de scannage initial (20) sont évaluées sur la base de la distance du bord (17, 49) et de la position relative du point initial du récepteur (15) par rapport au point de scannage initial (20) sur l'axe de rotation (19) et sur la base de données concernant la position de la tête optique (3) par rapport à l'axe de rotation (19), où ces données comprennent des données provenant d'un capteur (6) de déplacement longitudinal et d'un capteur (7) de déplacement transversal d'un cadre de support (4) et des données concernant l'angle de rotation du plan de mesure selon l'étape c) ; où chaque rangée (43, 44, 48, 51, 52) du capteur CCD/CMOS est évaluée séparément en tant que capteur CCD/CMOS à une ligne ;
f. déplacer la tête optique (3) dans la direction longitudinale et/ou transversale par rapport à la surface de l'objet rotatif (1, 26, 37), déterminer sa position par rapport au point de scannage initial (20), et répéter les étapes c), d) et e), où la tête optique (3) est positionnée dans la direction longitudinale et/ou transversale à l'aide du déplacement longitudinal et du déplacement transversal du cadre de support (4) sur lequel la tête optique (3) est montée ; et
g. obtenir un ensemble (21) de points (18, 50) sur la surface de l'objet rotatif (1, 26, 37) dans le plan de scannage et évaluer la forme du profil (22) de l'objet rotatif (1, 26, 37).

2. Le procédé selon la revendication précédente, **caractérisé en ce que** le bord (17, 49) de la transition d'ombre et le faisceau collimaté incident perpendiculairement (14) de rayons sont scannés à l'aide de cellules photosensibles sur la zone du récepteur (15) composée d'un capteur CCD/CMOS linéaire (16) ou d'un capteur CCD/CMOS matriciel (42).

3. Le procédé selon l'une quelconque des revendications précédentes, **caractérisé en ce que** l'angle du plan de mesure du micromètre optique (12, 36) par rapport à la surface de l'objet rotatif (1, 26, 37) est modifié pendant le scannage pas à pas ou en continu.

4. Le procédé selon la revendication 3, **caractérisé en ce que** le récepteur (15) et/ou l'émetteur (13) du faisceau collimaté (14) de rayons sont tournés autour de l'axe (40) de rotation du micromètre optique (12, 36) à l'aide d'un entraînement de rétroaction précis (39).

5. Le procédé selon l'une quelconque des revendications précédentes, **caractérisé en ce que** le faisceau collimaté (14) de rayons est un faisceau collimaté surfacique (46) de rayons incidents sur le capteur CCD/CMOS matriciel (42).

6. Le procédé selon l'une quelconque des revendications précédentes, **caractérisé en ce que** la tête optique (3) est déplacée pendant le scannage dans la première direction longitudinale par rapport à l'axe de rotation (19), où pour le mouvement de la tête optique (3) dans la seconde direction longitudinale opposée, le scannage est interrompu, puis la tête optique (3) est déplacée dans la seconde direction longitudinale au-delà de la position de scannage initiale, et ensuite, la tête optique (3) est déplacée vers la position de scannage initiale dans la première direction longitudinale.

7. Le procédé selon l'une quelconque des revendications précédentes, **caractérisé en ce que** l'objet rotatif (1, 26, 37) est tourné pendant le scannage autour de l'axe de rotation (19).

8. Le procédé selon l'une quelconque des revendications précédentes, **caractérisé en ce que** le plan de mesure du micromètre optique (12) est réglé à l'aide d'un rayon laser visible (30) à partir d'un dispositif de visée optique (29) monté sur la tête optique (3).

9. Le procédé selon l'une quelconque des revendications précédentes, **caractérisé en ce que** l'objet rotatif (1, 26, 37) est scanné par une paire de micromètres optiques (12) dans deux plans de mesure avec une paire de faisceaux collimatés (14) de rayons, où les bords (17) de la transition d'ombre et les faisceaux collimatés incidents (14) de rayons sont scannés à l'aide d'une paire de récepteurs (15) composés de capteurs CCD/CMOS linéaires (16), où les deux plans de mesure sont réglés à des angles de ± 45° par rapport à l'axe de rotation (19), et ces plans de mesure forment un angle de 90°, où dans le premier plan de mesure, la surface de l'objet rotatif (1, 26, 37) est scanné dans la première direction longitudinale et dans le second plan de mesure, la surface de l'objet rotatif (1, 26, 37) est scanné dans la seconde direction longitudinale opposée.

10. Le procédé selon l'une quelconque des revendications précédentes, **caractérisé en ce que** l'objet rotatif (1, 26, 37) est scanné par au moins deux micromètres optiques (12) dans au moins deux plans de mesure croisés, où chaque plan de mesure est défini par le faisceau collimaté (14) de rayons et la rangée (43, 44, 48, 51, 52) de cellules photosensibles sur la surface du récepteur (15) composée d'un capteur CCD/CMOS matriciel (42), où les bords (17, 49) de la transition d'ombre et les faisceaux collimatés incidents (14) de rayons sont scannés à l'aide de rangées individuelles (43, 44, 48, 51, 52) de cellules photosensibles des plans de mesure.

11. Le procédé selon la revendication 10, **caractérisé en ce que** la surface de l'objet rotatif (1, 26, 37) est progressivement scannée d'abord par le premier, puis par le second, ou ensuite par chaque micromètre suivant du groupe de micromètres optiques (12), ou la surface de l'objet rotatif (1, 26, 37) est scannée par tous les micromètres optiques (12) simultanément, où pour évaluer la forme du profil (22) de l'objet rotatif (1, 26, 37), les ensembles (21) de points (18, 50) obtenus à partir de micromètres optiques individuels sont combinés.

12. Le procédé selon les revendications 1 à 11, **caractérisé en ce que** la tête optique (3) est montée sur le cadre de support (4) de la machine-outil commandée par programme (2), de préférence un tour CNC, et l'objet rotatif (1, 26, 37) est monté sur la machine-outil commandée par programme (2) à l'aide d'un mandrin (9) et/ou d'une contre-poupée (10), où la jauge (11) est intégrée dans le mandrin (9) ou la contre-poupée (10), où la position de la tête optique (3) est évaluée à l'aide de capteurs de position intégrés de la machine-outil commandée par programme (2).

13. Le procédé selon les revendications 1 à 11, **caractérisé en ce que** la tête optique (3) est montée sur le cadre de support (4), où elle forme un dispositif de mesure séparé.

14. Un dispositif de mesure pour un scannage sans contact d'un profil d'un objet rotatif (1, 26, 37) qui est défini par sa surface et un axe de rotation (19) monté rotatif autour de l'axe de rotation dans un dispositif et pour évaluer des dimensions externes de l'objet rotatif directement sur une machine-outil commandée par programme ou pour une utilisation en tant que dispositif de mesure séparé, où le dispositif de mesure comprend une tête optique (3), un cadre de support (4), une unité d'évaluation (5), des capteurs (6) de déplacement longitudinal et d'autres capteurs (7) de déplacement transversal du cadre de support (4) et où le dispositif de mesure est adapté pour mettre en oeuvre le procédé selon l'une quelconque des revendications précédentes, où la tête optique positionnable (3) est montée sur le cadre de support (4) du dispositif de mesure, la tête optique positionnable (3) ayant au moins un micromètre optique (12, 36) du type barrage qui comprend un émetteur (13) et un récepteur (15) d'au moins un faisceau collimaté (14) de rayons, où le récepteur comprend au moins une rangée (43, 44, 48, 51, 52) de cellules photosensibles d'un capteur CCD/CMOS (16, 42), où le au moins un faisceaux collimaté (14) et la au moins une rangée de cellules photosensibles du capteur CCD/CMOS forment au moins un plan de mesure pour scanner la surface de l'objet rotatif (1, 26, 37) avec au moins un plan de mesure à un angle de 90° ± 45° par rapport à la surface de l'objet rotatif (1, 26, 37), où le récepteur (15) comprend sur sa zone un capteur CCD/CMOS linéaire (16) ou un capteur CCD/CMOS matriciel (42) pour scanner au moins un bord (17, 49) d'une transition d'ombre et du faisceau collimaté incident (14) de rayons, où chaque bord (17, 49) est une projection d'un point (18) ou de points (18, 50) sur la surface de l'objet rotatif (1, 26, 37), et où ledit micromètre optique est adapté pour avoir chaque rangée (43, 44, 48, 51, 52) dudit capteur CCD/CMOS (16, 42) évaluée séparément en tant que capteur CCD/CMOS linéaire.
